(19) Europäisches Patentamt
European Patent Office
Office européen des brevets

(11) **EP 4 738 179 A1**

(12) **EUROPEAN PATENT APPLICATION**
published in accordance with Art. 153(4) EPC

(43) Date of publication:
06.05.2026  Bulletin 2026/19

(21) Application number: 24847625.1

(22) Date of filing: 03.04.2024

(51) International Patent Classification (IPC):
*G06F 30/27* $^{(2020.01)}$

(52) Cooperative Patent Classification (CPC):
G06F 17/16; G06F 18/20; G06F 18/24; G06F 30/27;
G06N 3/0464; G06N 3/0499; G06N 3/084;
G06N 20/00

(86) International application number:
PCT/CN2024/086086

(87) International publication number:
WO 2025/025659 (06.02.2025 Gazette 2025/06)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.07.2023  CN 202310940699

(71) Applicant: Huawei Technologies Co., Ltd.
Shenzhen, Guangdong 518129 (CN)

(72) Inventors:
• YANG, Lin
  Shenzhen, Guangdong 518129 (CN)
• LYU, Junlong
  Shenzhen, Guangdong 518129 (CN)
• LV, Wenlong
  Shenzhen, Guangdong 518129 (CN)
• CHEN, Zhitang
  Shenzhen, Guangdong 518129 (CN)

(74) Representative: MERH-IP Matias Erny Reichl
Hoffmann
Patentanwälte PartG mbB
Paul-Heyse-Straße 29
80336 München (DE)

(54) **ANTENNA DESIGN METHOD AND APPARATUS**

(57)  This application pertains to the field of artificial intelligence AI technologies, and discloses an antenna design method and apparatus. The method includes: determining a design parameter of an antenna through a plurality of iterations, where an $i^{th}$ iteration process is as follows: obtaining a plurality of vectors from optimization space, where M elements in each vector respectively represent M design parameters of the antenna; and inputting input distributions of the M design parameters and the plurality of vectors to a surrogate model of Bayesian optimization BO, to obtain a plurality of groups of predicted values of a performance parameter of the antenna, where a processing process of the surrogate model includes calculating a covariance matrix between a plurality of random vectors, and a covariance between any two vectors is obtained by performing calculation on sample sets obtained by sampling input distributions of the vectors. During calculation, an acceleration algorithm based on Nystrom approximation is used to reduce complexity, to quickly determine the design parameter of the antenna. The foregoing method is applicable to a design parameter input of any distribution type, and can greatly improve inference efficiency of a design parameter optimization process.

EP 4 738 179 A1

Obtain a plurality of vectors from optimization space, where each of the plurality of vectors includes M elements, the M elements respectively represent M design parameters of the antenna, the optimization space is used to describe a value range of each of the M design parameters, and M and i are positive integers

S610

Obtain input distributions of the M design parameters, and input the input distributions of the M design parameters and the plurality of vectors to a surrogate model of Bayesian optimization BO, to obtain a plurality of groups of predicted values of a performance parameter of the antenna and a plurality of degrees of certainty respectively corresponding to the plurality of groups of predicted values, where the plurality of groups of predicted values respectively correspond to the plurality of vectors, the plurality of degrees of certainty are respectively used to describe confidences of the plurality of groups of predicted values, a processing process of the surrogate model includes calculating a covariance between any two of the plurality of vectors, and the covariance between any two vectors is obtained by performing calculation on a sample set obtained by sampling the input distributions

S620

Process the plurality of groups of predicted values and the plurality of degrees of certainty based on an acquisition function of the BO, to determine a first vector from the plurality of vectors, where an output of the acquisition function that corresponds to the first vector is the largest, and input the first vector to an objective function to obtain a group of performance parameters of the antenna

S630

When the group of performance parameters of the antenna meets a preset condition or i is equal to a preset quantity of times, determine M design parameters included in the first vector as design parameters of the antenna

S640

FIG. 6

# EP 4 738 179 A1

## Description

This application claims priority to Chinese Patent Application No. 202310940699.9, filed with the China National Intellectual Property Administration on July 28, 2023 and entitled "ANTENNA DESIGN METHOD AND APPARATUS", which is incorporated herein by reference in its entirety.

## TECHNICAL FIELD

This application relates to the field of artificial intelligence (Artificial Intelligence, AI) technologies in big data, and in particular, to an antenna design method and apparatus.

## BACKGROUND

Bayesian optimization (Bayesian Optimization, BO) is a sample-efficient global optimization algorithm, and is usually applied to various verification-expensive black-box optimization issues. Each iteration of the algorithm mainly includes two important steps: (1) A probability-based surrogate model (Surrogate Model) is constructed based on existing observation data to describe a relationship between an input x and an output y of a to-be-optimized objective function. (2) An acquisition function (Acquisition Function) is designed to use a modeling result of the surrogate model to provide guidance for optimization decision-making and select a next query point (Query Point). Iteration is repeatedly performed until an optimal value is found or a maximum quantity of iterations is reached. Currently, the BO has been successfully applied to many optimization tasks, such as antenna design, neural network structure search, algorithm hyperparameter optimization, wireless network performance optimization, and robot control.

During optimization for some complex issues, randomness inevitably occurs in an optimization process to some extent, for example, a manufacturing tolerance and a process limitation during production of a product like an antenna, or environment fluctuation and an execution error in a control optimization process. Consequently, random noise is introduced into a design parameter x during verification, and the design parameter x is changed to x', leading to fluctuation of an optimization result. In the conventional technology, to cope with uncertainty introduced during optimization, modeling is directly performed on an uncertain input. To be specific, a surrogate model is constructed between the uncertain input and an input for an objective function, to resolve the foregoing problem of uncertainty.

However, the surrogate model constructed in the conventional technology is applicable only to a case in which a perturbation type follows a Gaussian-like distribution. In addition, a calculation process during optimization is complex, and inference efficiency is low.

## SUMMARY

Embodiments of this application provide an antenna design method and apparatus, to find, under perturbation of an input of any distribution type, a design parameter that enables an antenna to obtain an optimal average performance parameter. An application scope is wide, and calculation complexity can be effectively reduced through accelerated processing, to greatly improve inference efficiency of a surrogate model during design parameter optimization.

According to a first aspect, this application provides an antenna design method. The method includes: determining a design parameter of the antenna through a plurality of iterations, where an $i^{th}$ iteration process is as follows: obtaining a plurality of vectors from optimization space, where each of the plurality of vectors includes M elements, the M elements respectively represent M design parameters of the antenna, the optimization space is used to describe a value range of each of the M design parameters, and M and i are positive integers; obtaining input distributions of the M design parameters, and inputting the input distributions of the M design parameters and the plurality of vectors to a surrogate model of Bayesian optimization BO, to obtain a plurality of groups of predicted values of a performance parameter of the antenna and a plurality of degrees of certainty respectively corresponding to the plurality of groups of predicted values, where the plurality of groups of predicted values respectively correspond to the plurality of vectors, the plurality of degrees of certainty are respectively used to describe confidences of the plurality of groups of predicted values, a processing process of the surrogate model includes calculating a covariance between any two of the plurality of vectors, and the covariance between any two vectors is obtained by performing calculation on a sample set obtained by sampling the input distributions; processing the plurality of groups of predicted values and the plurality of degrees of certainty based on an acquisition function of the BO, to determine a first vector from the plurality of vectors, where an output of the acquisition function that corresponds to the first vector is the largest; inputting the first vector to an objective function to obtain a group of performance parameters of the antenna; and when the group of performance parameters of the antenna meets a preset condition or i is equal to a preset quantity of times, determining M design parameters included in the first vector as design parameters of the antenna.

The objective function is used to describe a relationship between the design parameter and the performance parameter of the antenna.

From a perspective of technical effects, in this application, when the antenna is designed by using the Bayesian optimization BO, because calculation is performed by using a sample set obtained by sampling an input distribution of the design parameter of the antenna, in the method in this application, the input distribution of the design parameter does not need to follow a certain distribution regularity, and therefore the method is applicable to any type of input distribution and has higher adaptability.

In a feasible implementation, the preset condition includes a group of reference performance parameters of the antenna, and when a difference between the group of performance parameters of the antenna and the group of reference performance parameters is less than a preset threshold, the group of performance parameters of the antenna meets the preset condition.

From a perspective of technical effects, a group of predicted values with a smallest difference is a group of predicted values that best meets the preset condition, and M design parameters included in a first vector corresponding to the group of predicted values may be used as design parameters of the antenna, to achieve a highest qualification ratio of antennas manufactured on a production line.

In a feasible implementation, the method further includes: when the group of performance parameters of the antenna does not meet the preset condition and i is not equal to the preset quantity of times, adding the first vector and the group of performance parameters of the antenna, as one piece of training data, to a dataset used for training the surrogate model, and starting a next iteration.

From a perspective of technical effects, when the ith iteration does not meet an iteration termination condition, a piece of new training data may be generated to subsequently update a parameter of the surrogate model, to improve prediction accuracy of the surrogate model, and further improve an optimization result of the design parameter, to be specific, quickly obtain, through iteration, a design parameter that meets the preset condition.

In a feasible implementation, the plurality of vectors include a second vector and a third vector, and a covariance between the second vector and the third vector is obtained by inputting a first sample set and a second sample set to a maximum mean discrepancy MMD kernel function for processing. m vectors included in the first sample set are obtained through sampling based on the second vector and the input distribution. m vectors included in the second sample set are obtained through sampling based on the third vector and the input distribution. Each vector in the first sample set and the second sample set includes M elements, and the M elements respectively represent the M design parameters.

From a perspective of technical effects, the covariance between the second vector and the third vector is obtained by the MMD kernel function by processing sample sets obtained through sampling based on the two vectors and the input distribution. In this calculation manner, the input distribution does not need to follow a certain distribution regularity, and therefore the calculation manner is applicable to an input distribution that follows any distribution regularity or no regularity, and has high adaptability.

In a feasible implementation, a process of processing the first sample set and the second sample set by the MMD kernel function includes: adding a first matrix to a second matrix, and subtracting a third matrix multiplied by 2. The first matrix is obtained by multiplying a fourth matrix, a transposed matrix of the fourth matrix, and a pseudo-inverse matrix of the fourth matrix, where the fourth matrix is obtained by processing h vectors in the first sample set by using the MMD kernel function, and h is a positive integer less than m. The second matrix is obtained by multiplying a fifth matrix, a transposed matrix of the fifth matrix, and a pseudo-inverse matrix of the fifth matrix, where the fifth matrix is obtained by processing h vectors in the second sample set by using the MMD kernel function. The third matrix is obtained by multiplying a sixth matrix, a transposed matrix of the sixth matrix, and a pseudo-inverse matrix of the sixth matrix, where the sixth matrix is obtained by processing h vectors in the first sample set and h vectors in the second sample set by using the MMD kernel function.

From a perspective of technical effects, in this method, the first matrix, the second matrix, and the third matrix can be correspondingly obtained through calculation provided that calculation is performed on the fourth matrix, the fifth matrix, and the sixth matrix. All elements of the first matrix do not need to be calculated at a time, and only a part of elements need to be calculated. This can greatly reduce space complexity of calculation, increase a model inference speed, and further increase an optimization speed during antenna design.

In a feasible implementation, the method further includes: before obtaining the plurality of vectors from the optimization space, training the surrogate model by using the dataset of the surrogate model.

From a perspective of technical effects, before the surrogate model performs inference during each iteration process, the surrogate model is trained by using an updated dataset, to improve prediction accuracy of the surrogate model, and further improve an optimization result of the design parameter, to be specific, quickly obtain, through iteration, a design parameter that meets the preset condition.

In a feasible implementation, the input distribution is obtained by collecting statistics on production data, and an input distribution of each design parameter is represented by a probability distribution or a Gaussian distribution.

From a perspective of technical effects, this application imposes no requirement on the input distribution of the design parameter, is applicable to any type of input distribution, and has high adaptability.

In a feasible implementation, the M design parameters include one or more of the following parameters of the antenna: a thickness, a dielectric coefficient of a material, and a shape parameter; and the performance parameter includes one or more of the following parameters of the antenna: a scattering parameter, a radiation pattern, and a sidelobe width.

According to a second aspect, this application provides an antenna design apparatus. The apparatus determines a design parameter of the antenna through a plurality of iterations. The apparatus includes: an obtaining unit, configured to: during an $i^{th}$ iteration process, obtain a plurality of vectors from optimization space, where each of the plurality of vectors includes M elements, the M elements respectively represent M design parameters of the antenna, the optimization space is used to describe a value range of each of the M design parameters, and M and i are positive integers, and obtain input distributions of the M design parameters; a processing unit, configured to: obtain input distributions of the M design parameters, and input the input distributions of the M design parameters and the plurality of vectors to a surrogate model of Bayesian optimization BO, to obtain a plurality of groups of predicted values of a performance parameter of the antenna and a plurality of degrees of certainty respectively corresponding to the plurality of groups of predicted values, where the plurality of groups of predicted values respectively correspond to the plurality of vectors, the plurality of degrees of certainty are respectively used to describe confidences of the plurality of groups of predicted values, a processing process of the surrogate model includes calculating a covariance between any two of the plurality of vectors, and the covariance between any two vectors is obtained by performing calculation on a sample set obtained by sampling the input distributions, process the plurality of groups of predicted values and the plurality of degrees of certainty based on an acquisition function of the BO, to determine a first vector from the plurality of vectors, where an output of the acquisition function that corresponds to the first vector is the largest, and input the first vector to an objective function to obtain a group of performance parameters of the antenna; and a determining unit, configured to: when the group of performance parameters of the antenna meets a preset condition or i is equal to a preset quantity of times, determine M design parameters included in the first vector as design parameters of the antenna.

In a feasible implementation, the preset condition includes a group of reference performance parameters of the antenna, and when a difference between the group of performance parameters of the antenna and the group of reference performance parameters is less than a preset threshold, the group of performance parameters of the antenna meets the preset condition.

In a feasible implementation, the processing unit is further configured to: when the group of performance parameters of the antenna does not meet the preset condition and i is not equal to the preset quantity of times, add the first vector and the group of performance parameters of the antenna, as one piece of training data, to a dataset used for training the surrogate model, and start a next iteration.

In a feasible implementation, the plurality of vectors include a second vector and a third vector, and a covariance between the second vector and the third vector is obtained by inputting a first sample set and a second sample set to a maximum mean discrepancy MMD kernel function for processing. m vectors included in the first sample set are obtained through sampling based on the second vector and the input distribution. m vectors included in the second sample set are obtained through sampling based on the third vector and the input distribution. Each vector in the first sample set and the second sample set includes M elements, and the M elements respectively represent the M design parameters.

In a feasible implementation, a process of processing the first sample set and the second sample set by the MMD kernel function includes: adding a first matrix to a second matrix, and subtracting a third matrix multiplied by 2. The first matrix is obtained by multiplying a fourth matrix, a transposed matrix of the fourth matrix, and a pseudo-inverse matrix of the fourth matrix, where the fourth matrix is obtained by processing h vectors in the first sample set by using the MMD kernel function, and h is a positive integer less than m. The second matrix is obtained by multiplying a fifth matrix, a transposed matrix of the fifth matrix, and a pseudo-inverse matrix of the fifth matrix, where the fifth matrix is obtained by processing h vectors in the second sample set by using the MMD kernel function. The third matrix is obtained by multiplying a sixth matrix, a transposed matrix of the sixth matrix, and a pseudo-inverse matrix of the sixth matrix, where the sixth matrix is obtained by processing h vectors in the first sample set and h vectors in the second sample set by using the MMD kernel function.

In a feasible implementation, the processing unit is further configured to: before obtaining the plurality of vectors from the optimization space, train the surrogate model by using the dataset of the surrogate model.

In a feasible implementation, the input distribution is obtained by collecting statistics on production data, and an input distribution of each design parameter is represented by a probability distribution or a Gaussian distribution.

In a feasible implementation, the M design parameters include one or more of the following parameters of the antenna: a thickness, a dielectric coefficient of a material, and a shape parameter; and the performance parameter includes one or more of the following parameters of the antenna: a scattering parameter, a radiation pattern, and a sidelobe width.

According to a third aspect, this application provides a computer device. The computer device includes at least one processor, a memory, and an interface circuit. The memory, the interface circuit, and the at least one processor are interconnected through a line. The at least one memory stores instructions. When the instructions are executed by the processor, the method according to any one of the implementations of the first aspect is implemented.

According to a fourth aspect, this application provides a chip system. The chip system includes at least one processor, a memory, and an interface circuit. The memory, the interface circuit, and the at least one processor are interconnected through a line. The at least one memory stores instructions. When the instructions are executed by the processor, the method according to any one of the implementations of the first aspect is implemented.

According to a fifth aspect, an embodiment of this application provides a computer-readable storage medium. The computer-readable storage medium stores a computer program. When the computer program is executed, the method according to any one of the implementations of the first aspect is implemented.

According to a sixth aspect, an embodiment of this application provides a computer program product. The computer program product includes instructions. When the instructions are executed, the method according to any one of the implementations of the first aspect is implemented.

## BRIEF DESCRIPTION OF DRAWINGS

The following describes accompanying drawings used in embodiments of this application.

FIG. 1 is a diagram of a system architecture according to an embodiment of this application;
FIG. 2 is a diagram of another system architecture according to an embodiment of this application;
FIG. 3 is a diagram of a structure of a convolutional neural network according to an embodiment of this application;
FIG. 4 is a diagram of a structure of another convolutional neural network according to an embodiment of this application;
FIG. 5 is a diagram of a hardware structure of a chip according to an embodiment of this application;
FIG. 6 is a schematic flowchart of an antenna design method according to an embodiment of this application;
FIG. 7 is a diagram of a process of processing a first sample set and a second sample set by an MMD kernel function according to an embodiment of this application;
FIG. 8 is a diagram of another process of processing a first sample set and a second sample set by an MMD kernel function according to an embodiment of this application;
FIG. 9 is a diagram of a process of performing an antenna design method according to an embodiment of this application;
FIG. 10 shows example code of BO in an antenna design method according to an embodiment of this application;
FIG. 11 shows example code for increasing an inference speed of a surrogate model according to an embodiment of this application;
FIG. 12 is a diagram of a structure of an antenna design apparatus according to an embodiment of this application; and
FIG. 13 is a diagram of a structure of a computer device according to an embodiment of this application.

## DESCRIPTION OF EMBODIMENTS

The following describes embodiments of this application with reference to the accompanying drawings in embodiments of this application. In the descriptions of embodiments of this application, "/" indicates or, unless otherwise specified. For example, A/B may indicate A or B. In this specification, "and/or" describes only an association relationship between associated objects, and indicates that three relationships may exist. For example, A and/or B may indicate the following three cases: Only A exists, both A and B exist, and only B exists. In addition, in the descriptions of embodiments of this application, "a plurality of' means two or more than two.

In this specification, the claims, and the accompanying drawings of this application, the terms "first", "second", "third", "fourth", and the like are intended to distinguish between different objects but do not indicate a particular order. In addition, the terms "include", "have", and any variants thereof are intended to cover a non-exclusive inclusion. For example, a process, a method, a system, a product, or a device that includes a series of steps or units is not limited to the listed steps or units, but optionally further includes steps or units that are not listed, or optionally further includes other steps or units inherent to the process, the method, the product, or the device. An "embodiment" mentioned in this specification indicates that a specific feature, structure, or characteristic described with reference to the embodiment may be included in at least one embodiment of this application. The term appearing at various positions in this specification does not necessarily mean a same embodiment, and neither means an independent or alternative embodiment mutually exclusive with another embodiment. It is explicitly and implicitly understood by persons skilled in the art that embodiments described in this specification may be combined with another embodiment.

The following describes professional terms in this application.

(1) Bayesian optimization BO: an iterative parameter tuning method in which a parameter value for (approximately) minimizing a loss function can be found in a multidimensional definition domain through a few steps, so that a function value output by an objective function is optimal. The Bayesian optimization includes a surrogate model and an acquisition function. The surrogate model is used to model a relationship between an input and an output value of an objective function. The acquisition function obtains a next query point based on an output value of the surrogate model, so that the objective function can be subsequently used to verify the query point and generate a new observation point (to be specific, a piece of training data used to train the surrogate model).

(2) Kernel function: A function that uses a vector in original space as an input vector and returns a dot product of a vector in feature space (data space obtained through conversion, which may be high-dimensional space) is referred to as a kernel function.

(3) Covariance Covariance: indicates an overall error of two variables. The covariance is different from a variance that indicates an error of only one variable. If change trends of two variables are consistent, to be specific, if a value of one variable is greater than an expected value of the variable and a value of the other variable is also greater than an expected value of the variable, a covariance between the two variables is a positive value. If change trends of two variables are opposite, to be specific, if a value of one variable is greater than an expected value of the variable but a value of the other variable is less than an expected value of the variable, a covariance between the two variables is a negative value.

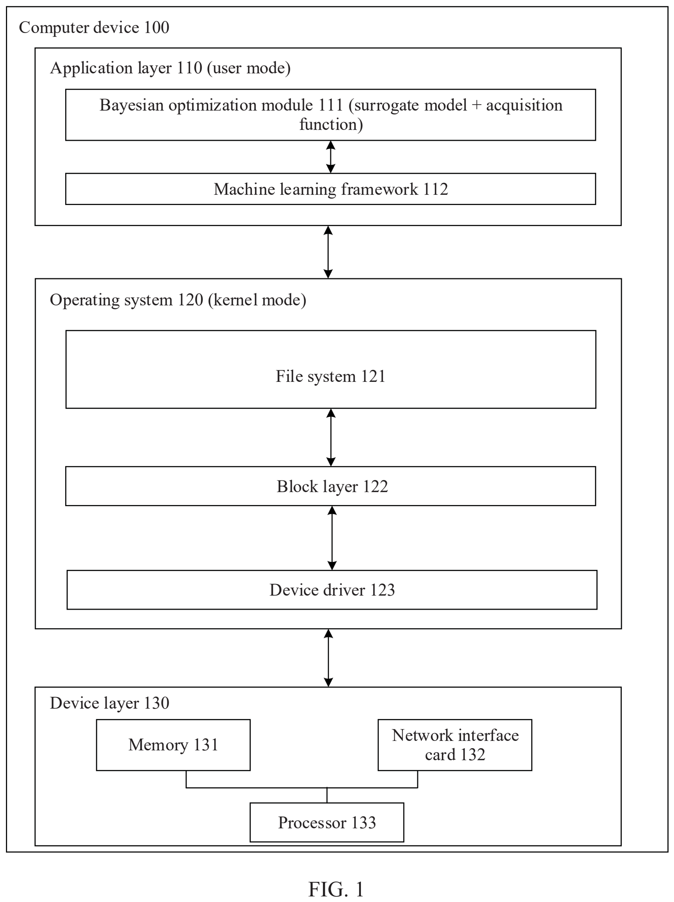

FIG. 1 is a diagram of a system architecture according to an embodiment of this application, and shows a system architecture of a computer device 100 for performing an antenna design method in this application. As shown in FIG. 1, the system architecture of the computer device may include an application layer 110, an operating system 120, and a device layer 130.

Optionally, the computer device 100 may be an intelligent terminal device like a personal computer, a tablet computer, or a mobile phone, a server, or the like. This is not limited in this application.

Optionally, the application layer 110 may include a machine learning framework 112 and a Bayesian optimization module 111 constructed based on the machine learning framework, where the module includes a surrogate model and an acquisition function. The Bayesian optimization module 111 is configured to perform an iterative optimization process in the antenna design method in this application.

Optionally, the operating system 120 may include a file system 121, a block layer 122, and a device driver 123. The file system 121 is configured to manage and schedule storage space of a file, and provide a logical structure, a physical structure, and a storage method of the file. The block layer 122 is an interface for the file system 121 to access the device layer 130, and is configured to connect the file system 121 to the device driver 123. The block layer 122 is configured to encapsulate/decapsulate a related request. The device driver 123 may include a display driver, a camera driver, an audio driver, a sensor driver, and the like.

Optionally, the device layer 130 may include a memory 131, a network interface card 132, and a processor 133.

In some feasible implementations, running of a program may be classified into a user mode and a kernel mode. When the program runs in the user mode, the processor can access only a part of data in the memory, and is not allowed to access a peripheral device, for example, a hard disk drive or the network interface card. When the program runs in the kernel mode, the processor may access all data in the memory, including a peripheral device, for example, a hard disk drive or the network interface card. In addition, the processor may also switch from one program to another program. Usually, an application at the application layer 110 runs in a user mode, and the operating system 120 runs in a kernel mode.

In a process in which the computer device 100 runs the Bayesian optimization module 111, the application layer 110 first initiates a read/write request; the file system 121 determines a logical address, in the memory 131, of data corresponding to the read/write request; the block layer 122 is configured to distribute the read/write request to the device driver 123; the device driver 123 is configured to encapsulate the read/write request, and send, to the memory 131, an encapsulated read/write request and the logical address corresponding to the read/write request; and the memory 131 decapsulates the encapsulated read/write request, converts the logical address corresponding to the read/write request into a corresponding physical address in the memory 131, and then writes data to the physical address or reads data from the physical address according to the read/write request.

The memory 131 stores a dataset used to train the surrogate model.

Optionally, the memory 131 may be any one of the following memories: a random access memory (Random Access Memory, RAM), a read-only memory (Read-Only Memory, ROM), a flash memory (Flash Memory), or the like. The RAM includes a static random access memory (Static RAM, SRAM), a dynamic random access memory (Dynamic RAM, DRAM), and the like. The ROM includes an erasable programmable ROM (Erasable Programmable ROM, EPROM), an electrically erasable programmable read-only memory (Electrically Erasable Programmable ROM, EEPROM), and the like.

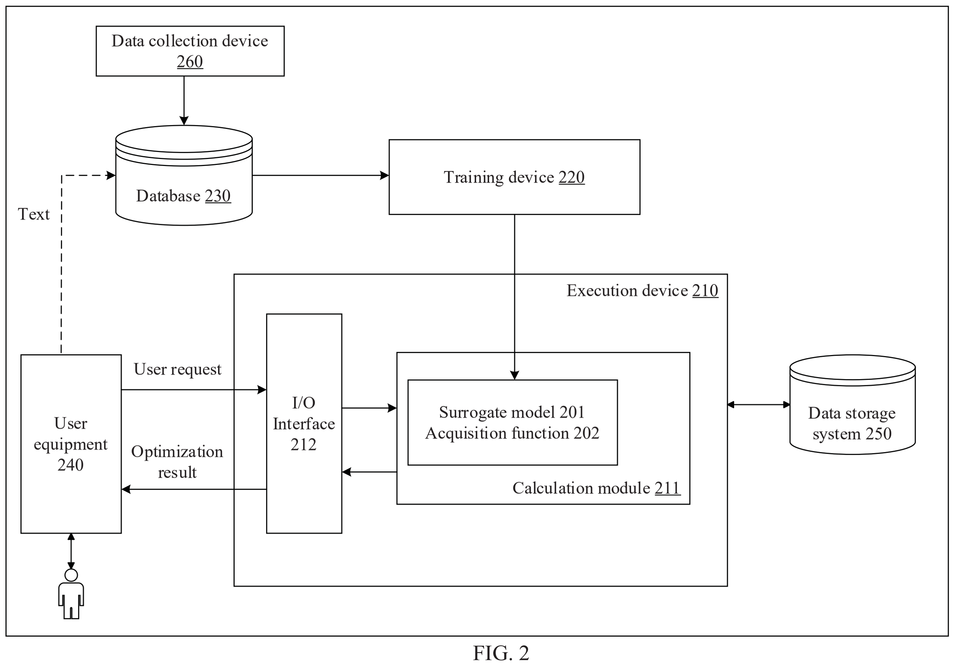

FIG. 2 is a diagram of another system architecture according to an embodiment of this application. As shown in FIG. 2, a data collection device 260 is configured to collect historical data of various design parameters during antenna production, and store the historical data in a database 230. A training device 220 trains a surrogate model in this application based on historical data of each group of design parameters maintained in the database 230 and antenna performance corresponding to each group of historical data.

Each group of design parameters includes values of different types of design parameters (to be specific, M different design parameters in the following embodiments), and each group of design parameters and antenna performance corresponding to the group of design parameters are one piece of training data. Each group of design parameters includes uncertainty (caused by impact of a manufacturing process or the like). To be specific, each group of design parameters may be directly obtained by measuring an actually manufactured product.

The design parameter includes one or more of the following parameters of an antenna: a thickness, a dielectric coefficient of a material, and a shape parameter.

The antenna performance includes one or more of the following parameters: a scattering parameter, a radiation pattern, and a sidelobe width.

The antenna design method in this application is mainly implemented through Bayesian optimization BO. During Bayesian optimization BO, a surrogate model 201 and an acquisition function 202 need to be used. Further, the surrogate model 201 may be a machine learning model, and may be specifically a mathematical model or a deep learning model.

In the example shown in FIG. 2, the surrogate model 201 and the acquisition function 202 are deployed on a same execution device 210. However, the surrogate model 201 and the acquisition function 202 may alternatively be deployed on different execution devices. In other words, in this application, antenna design may be performed by a plurality of devices in cooperation. This is not limited in this application.

Specifically, in the antenna design method, the surrogate model 201 and the acquisition function 202 are configured to perform an iteration process in the Bayesian optimization. The surrogate model 201 is configured to output a predicted value of an objective function and a confidence of the predicted value based on a group of input design parameters (to be specific, M design parameters in the following embodiments). The acquisition function 202 determines a group of design parameters for a next iteration based on the output of the surrogate model 201. When a group of design parameters meeting an iteration termination condition is found, the group of design parameters is output as an optimization result, and is sent to user equipment 240.

A user request sent by the user equipment 240 is an antenna design parameter optimization request, and the request may include one or more of speech or text.

FIG. 2 may alternatively be a diagram of functional modules in an antenna design process. The execution device 210 and a data storage system 250 may be integrated into the user equipment 240 when the user equipment 240 has a strong data processing capability. In some embodiments, the execution device 210 may be a device independent of the user equipment 240. The data storage system 250, the database 230, the training device 220, and the data collection device 260 may be integrated into the execution device 210, or disposed on another server on a cloud or a network. This is not limited in this application.

The data collection device 260 may be a terminal device or an input/output interface of a server or a cloud, and is configured to obtain a query statement and return an interaction layer (interface) of a reply statement.

In this application, the surrogate model 201 may be a deep learning model. Therefore, the following briefly describes training and inference principles of the deep learning model.

An architecture of the deep learning model may be a deep neural network. Work at each layer of the deep neural network may be described by using a mathematical expression $\vec{y}=a(W\bullet\vec{x}+b)$. From a physical perspective, work at each layer of the deep neural network may be understood as performing transformation from input space to output space (in other words, from row space to column space of a matrix) through five operations on the input space (a set of input vectors). The five operations include: 1. dimensionality increase/dimensionality reduction; 2. scale-up/scale-down; 3. rotation; 4. translation; and 5. "bending". The operations 1, 2, and 3 are performed by $W\bullet\vec{x}$, the operation 4 is performed by $+b$, and the operation 5 is implemented by $a(\ )$. The term "space" is used herein for expression because a categorized object is not a single object but a type of object, and the space is a set of all individuals of this type of object. $W$ is a weight vector, and each value in the vector represents a weight value of one neuron at this layer of neural network. The vector $W$ determines the foregoing spatial transformation from the input space to the output space. To be specific, a weight $W$ of each layer controls a manner of spatial transformation. An objective of training the deep neural network is to finally obtain a weight matrix (a weight matrix including vectors $W$ of a plurality of layers) of all layers of a trained neural network. Therefore, a neural network training process is essentially to learn a manner of controlling spatial transformation, more specifically, to learn a weight matrix.

Because an output of the deep neural network is expected to be close, as much as possible, to a predicted value that is actually expected, a predicted value of a current network may be compared with a target value that is actually expected, and then a weight vector of each layer of the neural network is updated based on a difference between the predicted value and the target value (certainly, before a $1^{st}$ update, an initialization process is usually performed, to be specific, parameters are preconfigured for all layers of the deep neural network). For example, if the predicted value of the network is large, the weight vector is adjusted to decrease the predicted value, and adjustment is continuously performed until the neural network can obtain, through prediction, the target value that is actually expected. Therefore, "how to obtain, through comparison, a difference between a predicted value and a target value" needs to be predefined. This is the loss function (loss function) or an objective function (objective function). The loss function and the objective function are important equations for measuring a difference between a predicted value and a target value. The loss function is used as an example. A larger output value (loss) of the loss function indicates a greater difference. Therefore, training of the deep neural network is a process of minimizing the loss.

In FIG. 2, the surrogate model 201 obtained through training by the training device 220 may be applied to different systems or devices. The execution device 210 is provided with an I/O interface 212 to exchange data with an external device. A "user" may input data, that is, a user request, to the I/O interface 212 by using the user equipment 240.

The execution device 210 may invoke data, code, or the like in the data storage system 250, or may store data, instructions, or the like to the data storage system 250.

A calculation module 211 may recognize the user request input by the user, and after recognizing an antenna design parameter optimization request, process input data (corresponding to M design parameters in the following embodiments) through the surrogate model 201 and the acquisition function 202 during each iteration process, and return a group of design parameters (namely, M design parameters) that meet an iteration termination condition to the user, where the M design parameters are an optimization result.

Finally, the I/O interface 212 returns the obtained M design parameters to the user equipment 240, and the M design parameters are displayed to the user on the user equipment 240.

Further, the training device 220 may obtain, through training based on different data according to different scenario requirements, a model related to a specific scenario, to provide a better result for the user.

In the case shown in FIG. 2, during a 1st iteration, the user may manually specify a group of design parameters to be input to the execution device 210, for example, perform an operation on an interface provided by the I/O interface 212. In another case, the user equipment 240 may automatically input a group of design parameters for a 1st iteration to the I/O interface 212. If the user equipment 240 needs to be authorized by the user to automatically generate the group of design parameters for the 1st iteration, the user may set corresponding permission on the user equipment 240. The user may view, on the user equipment 240, the optimization result output by the execution device 210, and a specific display form may be text or the like. Alternatively, the user equipment 240 may serve as a data collection end to store a collected correspondence between a design parameter and antenna performance to the database 230 for use during training.

It should be noted that FIG. 2 is merely a diagram of a system architecture according to an embodiment of the present invention. A positional relationship between devices, components, modules, and the like shown in FIG. 2 does not constitute any limitation. For example, in FIG. 2, the data storage system 250 is an external memory relative to the execution device 210. In another case, the data storage system 250 may alternatively be deployed in the execution device 210.

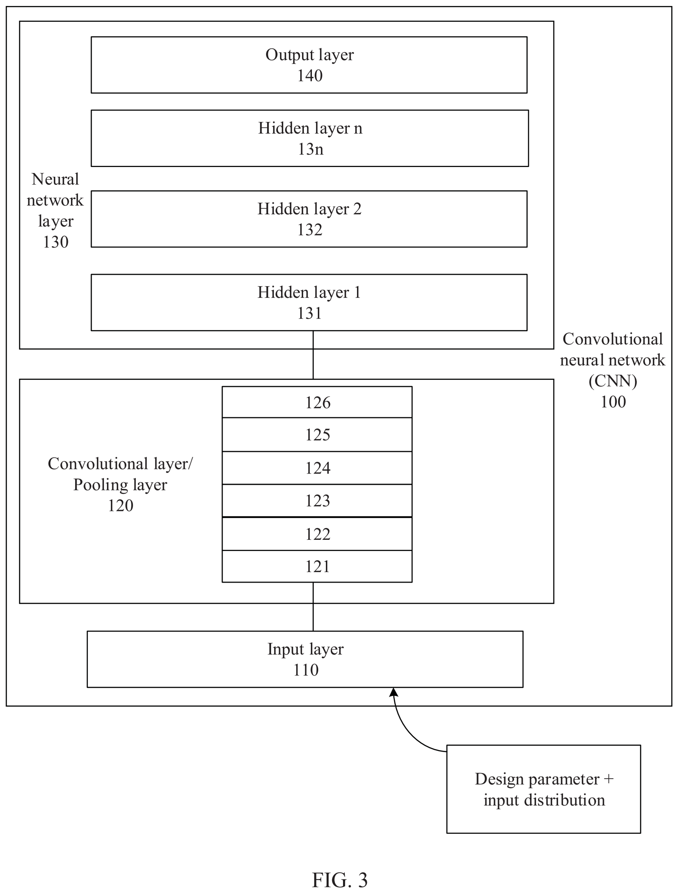

FIG. 3 is a diagram of a structure of a convolutional neural network according to an embodiment of this application. In this application, when a surrogate model is a deep learning model, the diagram may represent an internal structure of the surrogate model.

The convolutional neural network (Convolutional Neural Network, CNN) is a deep neural network with a convolutional structure, and is a deep learning (Deep Learning) architecture. In the deep learning architecture, multilayer learning is performed at different abstraction layers through a machine learning algorithm. As a deep learning architecture, the CNN is a feed-forward (Feed-Forward) artificial neural network. Neurons in the feed-forward artificial neural network respond to an overlapping area in an image input to the feed-forward artificial neural network.

As shown in FIG. 3, the convolutional neural network (CNN) 100 may include an input layer 110, a convolutional layer/pooling layer 120, where the pooling layer is optional, and a neural network layer 130.

Convolutional layer:

As shown in FIG. 3, the convolutional layer/pooling layer 120 may include, for example, layers 121 to 126. In an implementation, the layer 121 is a convolutional layer, the layer 122 is a pooling layer, the layer 123 is a convolutional layer, the layer 124 is a pooling layer, 125 is a convolutional layer, and 126 is a pooling layer. In another implementation, 121 and 122 are convolutional layers, 123 is a pooling layer, 124 and 125 are convolutional layers, and 126 is a pooling layer. To be specific, an output of a convolutional layer may be used as an input for a subsequent pooling layer, or may be used as an input for another convolutional layer to continue to perform a convolution operation.

The convolutional layer 121 is used as an example. The convolutional layer 121 may include a plurality of convolution operators. The convolution operator is also referred to as a kernel. In this application, the convolution operator is equivalent a filter for extracting specific information from input speech or semantic information. The convolution operator may be essentially a weight matrix, and the weight matrix is usually predefined.

Weight values in these weight matrices need to be obtained through massive training during actual application. Each weight matrix including weight values obtained through training may extract information from input data (to be specific, a plurality of vectors and an input distribution of each design parameter during each iteration process), to help the convolutional neural network 100 perform correct prediction.

When the convolutional neural network 100 has a plurality of convolutional layers, a larger quantity of general features are usually extracted at an initial convolutional layer (for example, 121). The general features may also be referred to as low-level features. With an increase in a depth of the convolutional neural network 100, a feature extracted at a later convolutional layer (for example, 125) is more complex, for example, is a high-level semantic feature. A feature with higher-level semantics is more suitable for a to-be-resolved problem.

Pooling layer:

A quantity of training parameters usually needs to be reduced. Therefore, a pooling layer usually needs to be periodically introduced after a convolutional layer. To be specific, for the layers 121 to 126 in 120 shown in FIG. 3, one convolutional layer may be followed by one pooling layer, or a plurality of convolutional layers may be followed by one or more pooling layers.

Neural network layer 130:

After processing is performed at the convolutional layer/pooling layer 120, the convolutional neural network 100 is not ready to output needed output information. A reason is as follows: As described above, at the convolutional layer/pooling layer 120, only a feature is extracted, and a quantity of parameters resulting from the input data is reduced. However, to generate final output information (needed class information or other related information), the convolutional neural network 100 needs to generate, through the neural network layer 130, an output of one needed class or outputs of a group of needed classes. Therefore, the neural network layer 130 may include a plurality of hidden layers (131, 132, ..., and 13n shown in FIG. 3) and an output layer 140. Parameters included in the plurality of hidden layers may be obtained through pre-training based on related training data of a specific task type.

The plurality of hidden layers in the neural network layer 130 are followed by the output layer 140, to be specific, a last layer of the entire convolutional neural network 100. The output layer 140 has a loss function similar to a categorical cross-entropy, and the loss function is specifically used to calculate a prediction error. When forward propagation (for example, propagation from 110 to 140 in FIG. 3 is forward propagation) of the entire convolutional neural network 100 is completed, back propagation (for example, propagation from 140 to 110 in FIG. 3 is back propagation) is started to update weight values and deviations of the layers mentioned above, to reduce a loss of the convolutional neural network 100 and an error between a result output by the convolutional neural network 100 through the output layer and an ideal result.

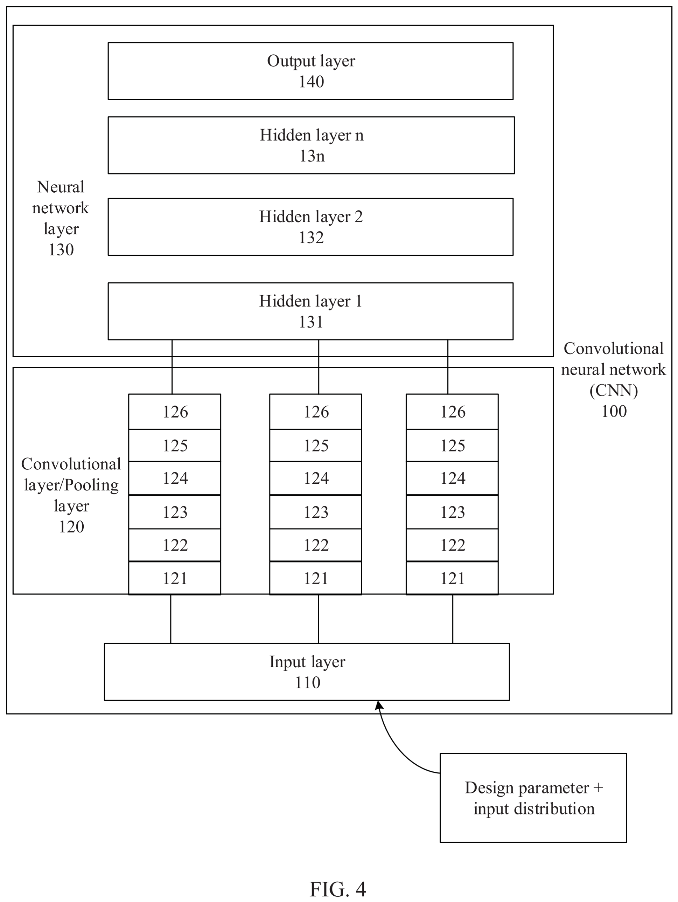

It should be noted that the convolutional neural network 100 shown in FIG. 3 is merely an example convolutional neural network. During specific application, a convolutional neural network may alternatively be in a form of another network model. For example, as shown in FIG. 4, a plurality of convolutional layers/pooling layers input, in parallel, extracted features to the neural network layer 130 for processing.

In this solution, a deep learning model of the structure shown in FIG. 3 or FIG. 4 may be a surrogate model 201 in BO optimization, and is configured to generate a predicted value of an objective function and a degree of certainty of the predicted value.

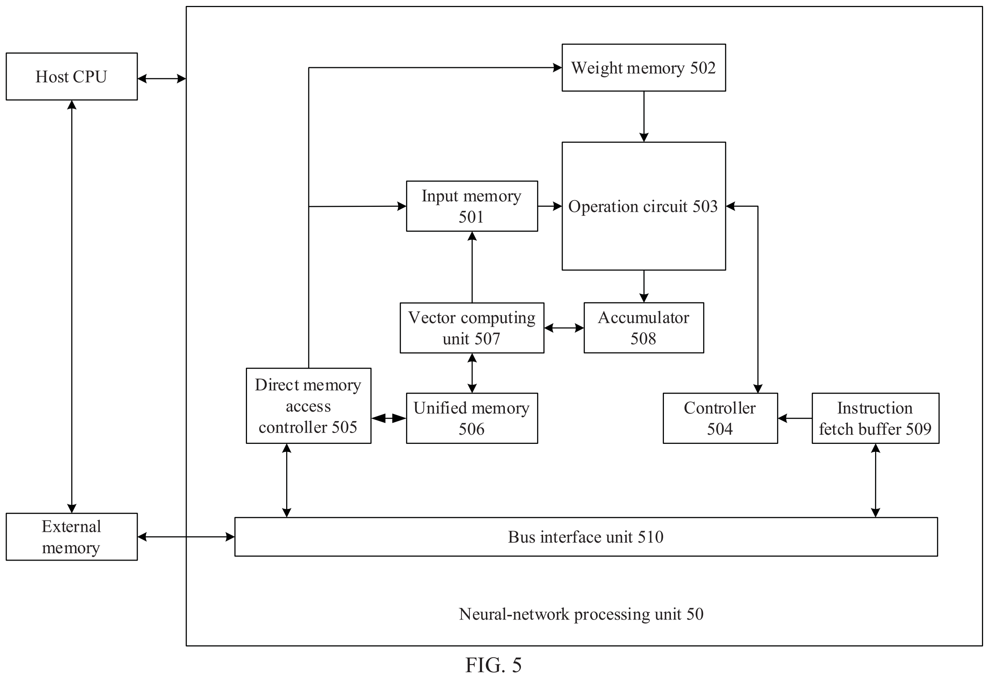

FIG. 5 is a diagram of a hardware structure of a chip according to an embodiment of this application. As shown in FIG. 5, a neural-network processing unit (Neural-Networks Processing Unit, NPU) 50 is mounted to a host CPU (Host CPU) as a coprocessor, and the host CPU allocates a task to the NPU 50. A core part of the NPU is an operation circuit 503. A controller 504 controls the operation circuit 503 to extract data in a memory (a weight memory or an input memory) and perform an operation.

In some implementations, the operation circuit 503 includes a plurality of process engines (Process Engine, PE). In some implementations, the operation circuit 503 is a two-dimensional systolic array. The operation circuit 503 may alternatively be a one-dimensional systolic array or another electronic circuit capable of performing mathematical operations such as multiplication and addition. In some implementations, the operation circuit 503 is a general-purpose matrix processor.

For example, it is assumed that there are an input matrix A, a weight matrix B, and an output matrix C. The operation circuit fetches, from a weight memory 502, data corresponding to the matrix B, and caches the data in each PE in the operation circuit. The operation circuit fetches data of the matrix A from an input memory 501 to perform a matrix operation on the matrix B, and stores an obtained partial result or an obtained final result of the matrix in an accumulator 508 accumulator.

A vector computing unit 507 may perform further processing, for example, vector multiplication, vector addition, an exponential operation, a logarithmic operation, or magnitude comparison, on an output of the operation circuit. For example, the vector computing unit 507 may be used for network computing, for example, pooling (Pooling), batch normalization (Batch Normalization), or local response normalization (Local Response Normalization), at a non-convolutional/non-FC layer in a neural network.

In some implementations, the vector computing unit 507 can store a processed output vector to a unified memory 506. For example, the vector computing unit 507 may apply a nonlinear function to the output of the operation circuit 503, for example, a vector of an accumulated value, to generate an activation value. In some implementations, the vector computing unit 507 generates a normalized value, a combined value, or both a normalized value and a combined value. In some implementations, the processed output vector can be used as an activation input for the operation circuit 503, for example, used at a subsequent layer in the neural network.

The unified memory 506 is configured to store input data and output data.

A direct memory access controller (Direct Memory Access Controller, DMAC) 505 transfers input data in an external memory to the input memory 501 and/or the unified memory 506, stores weight data in the external memory to the weight memory 502, and stores data in the unified memory 506 to the external memory.

A bus interface unit (Bus Interface Unit, BIU) 510 is configured to implement interaction between the host CPU, the DMAC, and an instruction fetch buffer 509 through a bus.

The instruction fetch buffer (Instruction Fetch Buffer) 509 connected to the controller 504 is configured to store instructions to be used by the controller 504.

The controller 504 is configured to invoke the instructions cached in the instruction fetch buffer 509, to control an operating process of the operation accelerator.

Usually, all of the unified memory 506, the input memory 501, the weight memory 502, and the instruction fetch buffer 509 are on-chip (On-Chip) memories, and the external memory is a memory outside the NPU. The external memory may be a double data rate synchronous dynamic random access memory (Double Data Rate Synchronous Dynamic Random Access Memory, DDR SDRAM for short), a high bandwidth memory (high bandwidth memory, HBM), or another readable and writable memory.

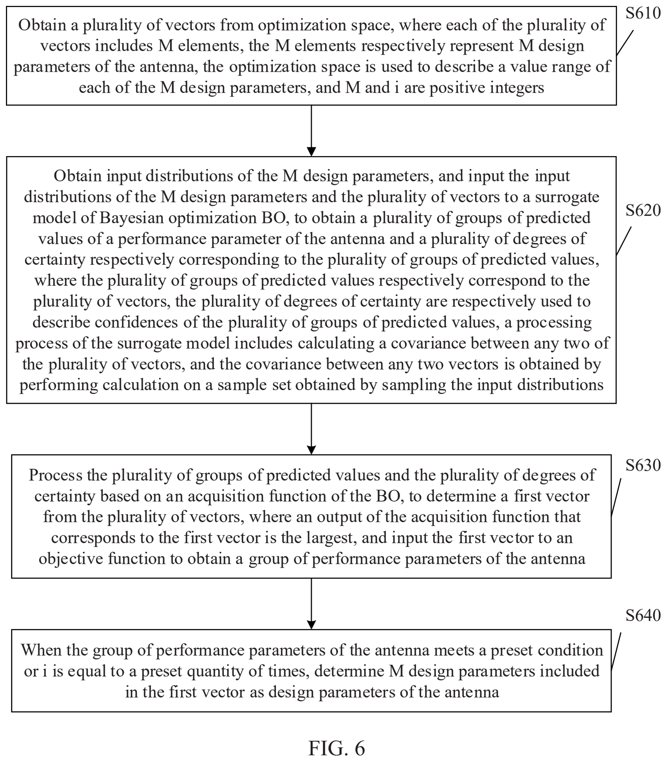

FIG. 6 is a schematic flowchart of an antenna design method according to an embodiment of this application. In the antenna design method, iteration is performed through Bayesian optimization BO, to select a design parameter that enables product performance to achieve a preset objective. During the BO, a design parameter of an antenna is selected through a plurality of iterations, and a process of an $i^{th}$ iteration includes the following steps.

Step S610: Obtain a plurality of vectors from optimization space, where each of the plurality of vectors includes M elements, the M elements respectively represent M design parameters of the antenna, the optimization space is used to describe a value range of each of the M design parameters, and M and i are positive integers.

The shape parameter may further include one or more of the following parameters: a length or a width of each stub of the antenna, an included angle between any two stubs, and the like.

Each of the M design parameters corresponds to one value range, and the optimization space includes a value range of each design parameter. Values of M design parameters included in each of the plurality of vectors are within a corresponding value range.

During any two of the plurality of iterations, quantities of a plurality of vectors obtained from the optimization space may be the same or different.

If a quantity of the plurality of vectors is i, the i vectors may be equivalent to a matrix with M rows and i columns.

In the following embodiments, an example in which the quantity of the plurality of vectors is i is used for description.

Step S620: Obtain input distributions of the M design parameters, and input the input distributions of the M design parameters and the plurality of vectors to a surrogate model of Bayesian optimization BO, to obtain a plurality of groups of predicted values of a performance parameter of the antenna and a plurality of degrees of certainty respectively corresponding to the plurality of groups of predicted values, where the plurality of groups of predicted values respectively correspond to the plurality of vectors, the plurality of degrees of certainty are respectively used to describe confidences of the plurality of groups of predicted values, a processing process of the surrogate model includes calculating a covariance between any two of the plurality of vectors, and the covariance between any two vectors is obtained by performing calculation on a sample set obtained by sampling the input distributions.

Specifically, the plurality of groups of predicted values are obtained through calculation by inputting a covariance matrix (when the quantity of the plurality of vectors is i, a dimension of the covariance matrix is i×i) to a Gaussian process (Gaussian Process, GP) regression model, and an element in the covariance matrix is a covariance between two of the i vectors.

The input distributions of the M design parameters may be obtained by collecting statistics on historical production data. Specifically, statistics are collected, based on an antenna product manufactured on a production line, on specific values that correspond to the foregoing design parameters and that are obtained through actual production.

Further, input distributions of the foregoing design parameters may be represented in a form without a certain distribution regularity, for example, a probability distribution, or in a form with a certain distribution regularity, for example, a Gaussian distribution.

The probability distribution may be further represented by a probability density function (as shown in a formula (1)) or a probability model (as shown in a formula (2)).

$$x \sim \mathcal{N}(0, 0.01) \qquad (1)$$

$$x \sim GMM\left([0, 1], \begin{bmatrix} 0.01^2 & 0.01^2 \\ 0.02^2 & 0.03^2 \end{bmatrix}\right) \ (2)$$

$x$ represents a design parameter, and $\mathcal{N}$ and *GMM* represent distribution ranges of the design parameter.

In this application, the surrogate model is used to model a relationship between a design parameter (namely, the i input vectors) and a predicted value (namely, a performance parameter) output by an objective function. To be specific, an output of the surrogate model includes a predicted value of a performance parameter, and further includes a degree of certainty of the predicted value.

The objective function represents a relationship between a design parameter and a performance parameter of the antenna. An input for the objective function is the design parameter of the antenna, and an output is the performance parameter of the antenna.

The performance parameter includes one or more of the following parameters of the antenna: a scattering parameter, a radiation pattern, and a sidelobe width.

The degree of certainty is used to describe a confidence of the predicted value output by the surrogate model. For example, a degree of certainty of each performance parameter may be within a range of [0, 1]. The degree of certainty being closer to 1 indicates a higher confidence of the performance parameter output by the surrogate model. The degree of certainty being closer to 0 indicates a lower confidence of the performance parameter output by the surrogate model.

The following describes in detail a process of calculating the predicted value of the performance parameter.

After receiving the i input vectors and the input distributions of the design parameters, the surrogate model first obtains the covariance matrix i×i through calculation. Then the covariance matrix i×i is input to the GP regression model to obtain the predicted value of the performance parameter through calculation. A process of calculating the predicted value by using the GP regression model is not described in detail in this application.

A specific process of obtaining the covariance matrix i×i through calculation by using input data is as follows:

Each element in the covariance matrix i×i is a covariance between two of the i vectors, including a covariance of a vector itself. Specifically, a fourth vector of the i vectors (any one of the i vectors) is used as an example. The covariance matrix i×i includes i covariances obtained by performing calculation on the fourth vector and the i vectors respectively.

A specific calculation process for the covariance matrix i×i is shown in a formula (3):

$$\begin{bmatrix} c(1)*c(1) & ... & c(1)*c(i) \\ ... & ... & ... \\ c(i)*c(1) & ... & c(i)*c(i) \end{bmatrix} \qquad (3)$$

$c(i)$ represents an $i^{th}$ vector of the $i$ vectors, and * represents a covariance between two vectors.

A covariance between any two vectors in the formula (3) is obtained by performing calculation on sample sets obtained by sampling the two vectors and the input distributions of the design parameters. The covariance between the vectors is calculated based on the sample sets obtained through sampling, so that the Bayesian optimization method in this application is applicable to selection of a design parameter of any input distribution type, to be specific, is not limited by a type of an input distribution of a design parameter, and has high adaptability.

A second vector and a third vector of the i vectors are used below as an example to describe a process of calculating a covariance between the second vector and the third vector. The second vector and the third vector are any two of the i vectors.

First, sampling is performed based on the second vector and the input distributions of the M design parameters to obtain a first sample set including m vectors, and sampling is performed based on the third vector and the input distributions of the M design parameters to obtain a second sample set including m vectors. Each vector in the first sample set and the second sample set includes M elements, and the M elements respectively represent the M design parameters.

Specifically, the second vector is used as an example to describe a process of obtaining the first sample set through sampling. The second vector includes M elements, and each element represents a design parameter. A first design parameter (for example, coordinates are (0.3, 0.4)) in the M elements is used as an example. m first design parameters included in the m vectors in the first sample set are obtained through sampling based on a range represented by a center ((0.3, 0.4)) of distribution and an input distribution of the first design parameter.

Similarly, the second sample set may be obtained through sampling in a same manner.

Based on the foregoing sampling process, the covariance between the second vector and the third vector is obtained by inputting the first sample set and the second sample set to a maximum mean discrepancy MMD kernel function for processing.

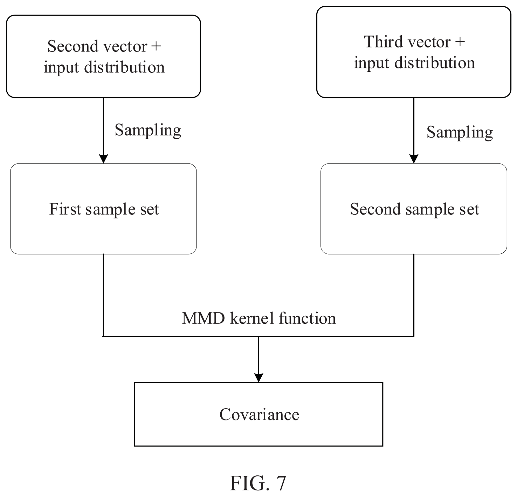

A process of obtaining the covariance between the second vector and the third vector by processing the first sample set and the second sample set may be described by using a flowchart shown in FIG. 7. As shown in FIG. 7, sampling is performed based on the second vector and the input distributions of the M design parameters to obtain the first sample set including the m vectors, and sampling is performed based on the third vector and the input distributions of the M design parameters to obtain the second sample set including the m vectors. Then the first sample set and the second sample set are input to the MMD kernel function to obtain the covariance between the second vector and the third vector.

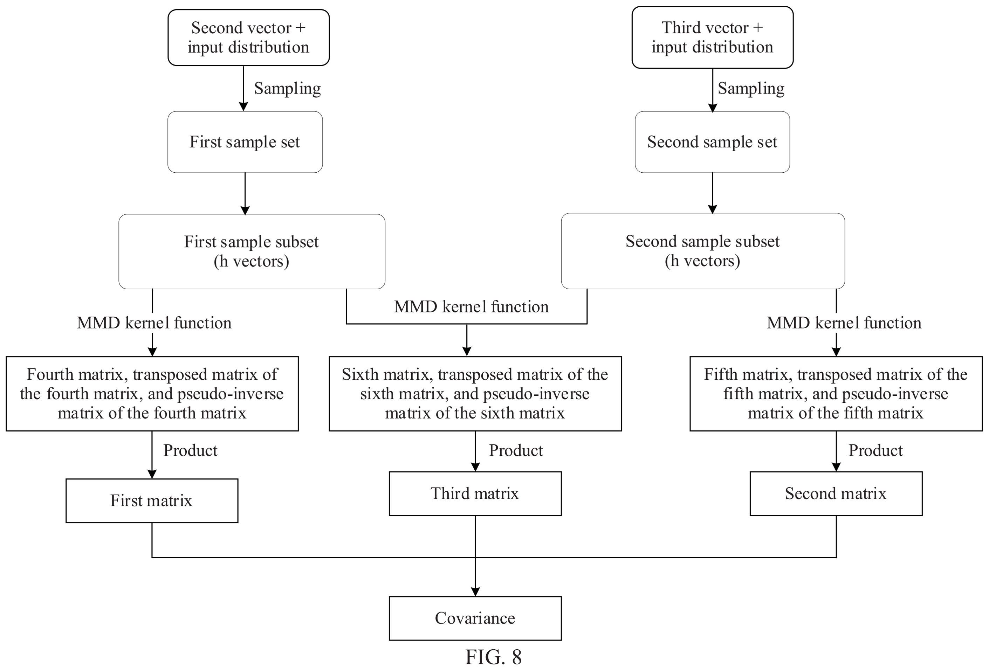

A specific process of processing the first sample set and the second sample set by using the MMD kernel function to obtain the covariance between the second vector and the third vector is described below with reference to FIG. 8. In this process, a Nystrom acceleration method is used, to effectively reduce space complexity of calculation and accelerate an inference process of the surrogate model, to increase a speed of an antenna optimization process.

A process of processing the first sample set and the second sample set by the MMD kernel function includes: adding a first matrix to a second matrix, and subtracting a third matrix multiplied by 2.

The first matrix is obtained by multiplying a fourth matrix, a transposed matrix of the fourth matrix, and a pseudo-inverse matrix of the fourth matrix, where the fourth matrix is obtained by processing h vectors in the first sample set by using the MMD kernel function. The second matrix is obtained by multiplying a fifth matrix, a transposed matrix of the fifth matrix, and a pseudo-inverse matrix of the fifth matrix, where the fifth matrix is obtained by processing h vectors in the second sample set by using the MMD kernel function. The third matrix is obtained by multiplying a sixth matrix, a transposed matrix of the sixth matrix, and a pseudo-inverse matrix of the sixth matrix, where the sixth matrix is obtained by processing h samples in the first sample set and h vectors in the second sample set by using the MMD kernel function. h is a positive integer less than m.

Specifically, as shown in FIG. 8, first, h vectors are selected from the first sample set as a first sample subset, and h vectors are selected from the second sample set as a second sample subset. Then the h vectors in the first sample subset are processed by using the MMD kernel function to obtain the fourth matrix. Then the transposed matrix of the fourth matrix and the pseudo-inverse matrix of the fourth matrix are obtained through calculation based on the fourth matrix. Then the fourth matrix, the transposed matrix of the fourth matrix, and the pseudo-inverse matrix of the fourth matrix are multiplied to obtain the first matrix.

Similarly, the second sample subset is processed by using the MMD kernel function through a same calculation process, to obtain the fifth matrix, the transposed matrix of the fifth matrix, the pseudo-inverse matrix of the fifth matrix, and the second matrix.

In addition, the first sample subset and the second sample subset are processed by using the MMD kernel function, to obtain the sixth matrix, the transposed matrix of the sixth matrix, the pseudo-inverse matrix of the sixth matrix, and the third matrix. Finally, the first matrix is added to the second matrix, and the third matrix multiplied by 2 is subtracted, to obtain the covariance between the second vector and the third vector.

Specific calculation processes for the fourth matrix, the fifth matrix, and the sixth matrix may be represented by formulas (4), (5), and (6) respectively:

$$\begin{bmatrix} MMD\ kernel(x_1, x_1) & ... & MMD\ kernel(x_1, x_h) \\ ... & ... & ... \\ MMD\ kernel(x_m, x_1) & ... & MMD\ kernel(x_m, x_h) \end{bmatrix} \quad (4)$$

$$\begin{bmatrix} MMD\ kernel(y_1, y_1) & ... & MMD\ kernel(y_1, y_h) \\ ... & ... & ... \\ MMD\ kernel(y_m, y_1) & ... & MMD\ kernel(y_m, y_h) \end{bmatrix} \quad (5)$$

$$\begin{bmatrix} MMD\ kernel(x_1, y_1) & ... & MMD\ kernel(x_1, y_h) \\ ... & ... & ... \\ MMD\ kernel(x_h, y_1) & ... & MMD\ kernel(x_h, y_h) \end{bmatrix} \quad (6)$$

Both a quantity of vectors in the first sample set and a quantity of vectors in the second sample set are m. $x$ is a vector in the first sample set, and $y$ is a vector in the second sample set. *MMD kernel* is the MMD kernel function. The subscripts 1, h, and m represent numbers of each vector in a sample set or a sample subset.

Optionally, the first matrix may be specifically obtained through calculation based on the following formula (7):

$$O = U U^+ U^T \qquad (7)$$

O is the first matrix, $U$ is the fourth matrix, $U^T$ is the transposed matrix of the fourth matrix, and $U^+$ is the pseudo-inverse matrix of the fourth matrix.

Similarly, the second matrix and the third matrix may also be obtained through calculation according to a similar calculation rule. Details are not described herein again.

Optionally, a process of obtaining the covariance between the second vector and the third vector through calculation by using the first matrix, the second matrix, and the third matrix may be expressed by using a formula (8):

$$Cov(x, y) = \frac{1}{m^2} 1_m^T U U^+ U^T 1_n + \frac{1}{m^2} 1_m^T V V^+ V^T 1_n - \frac{2}{m^2} 1_m^T W W^+ W^T 1_n \quad (8)$$

$Cov(x, y)$ is the covariance between the second vector and the third vector. $U$, $V$, and $W$ represent the fourth matrix, the fifth matrix, and the sixth matrix respectively. $1_m^T$ is XX, and $1_n$ is XX. $x$ and $y$ are a vector in the first sample set and a vector in the second sample set respectively.

Optionally, formulas (9), (10), and (11) show three example characteristic kernel functions Characteristic Kernel provided in embodiments of this application, and do not constitute a limitation on a kernel function used in the technical solutions of this application. An output of each of the three characteristic kernel functions is an element in the covariance matrix i×i, namely, a covariance between any two vectors, and an input is vectors in the first sample set and the second sample set.

$$K = e^{-\frac{\left( \widehat{MMD}^2 \left( \mathbb{P}, \mathbb{Q}; \Sigma_{\alpha_i \in \mathcal{S}} \left( 1 + \frac{1}{2\alpha_i} \frac{(x_1 - x_2)^2}{l^2} \right)^{-\alpha_i} \right) \right)}{2}} \quad (9)$$

$$K = 1 - \widehat{MMD}^2 \left( \mathbb{P}, \mathbb{Q}; \Sigma_{\alpha_i \in \mathcal{S}} \left( 1 + \frac{1}{2\alpha_i} \cdot \frac{(x_1 - x_2)^2}{l^2} \right)^{-\alpha_i} \right) \quad (10)$$

$$K = e^{-\frac{\left( \widehat{MMD}^2 \left( \mathbb{P}, \mathbb{Q}; e^{-\frac{(x_1 - x_2)^2}{2\ell^2}} \right) \right)}{2}} \quad (11)$$

$K$ is a covariance between two vectors. $\widehat{MMD}$ is an output result of calculation of the MMD kernel function. $\mathbb{P}$, $\mathbb{Q}$ are input distributions of two design parameters in two vectors in the first sample set and the second sample set. $l$ is a length scale (Length scale) and is a parameter of the GP regression model, and is used to control a degree of adaptability of the GP regression model to data. $\alpha_i$ is a signal variance (Signal Variance) and is also a parameter of the GP regression model, and determines an average distance between a predicted value and an average value of the model. $x$ and $y$ are a vector in the first sample set and a vector in the second sample set respectively.

$$\Sigma_{\alpha_i \in \mathcal{S}} \left( 1 + \frac{1}{2\alpha_i} \cdot \frac{(x_1 - x_2)^2}{l^2} \right)^{-\alpha_i}, \quad \Sigma_{\alpha_i \in \mathcal{S}} \left( 1 + \frac{1}{2\alpha_i} \cdot \frac{(x_1 - x_2)^2}{l^2} \right)^{-\alpha_i}, \quad e^{-\frac{(x_1 - x_2)^2}{2\ell^2}}$$

are MMD kernel functions respectively included in the three formulas, and are used to calculate a covariance between any two vectors in the first sample set and the second sample set.

After the predicted values and the degrees of certainty of the predicted values are obtained through the ith iteration process, the following step S630 is performed.

Step S630: Process the plurality of groups of predicted values and the plurality of degrees of certainty based on an acquisition function of the BO, to determine a first vector from the plurality of vectors, where an output of the acquisition function that corresponds to the first vector is the largest; and input the first vector to an objective function to obtain a group of performance parameters of the antenna.

Specifically, first, the plurality of groups of predicted values and the plurality of degrees of certainty are separately input in the acquisition function of the BO, to obtain a plurality of acquisition values, where the plurality of acquisition values respectively correspond to the plurality of groups of predicted values, the plurality of acquisition values include a first acquisition value with a largest value, and a group of predicted values corresponding to the first acquisition value corresponds to the first vector among the plurality of vectors.

The acquisition function of the BO is a function defined based on an inference result of the surrogate model, and is used to achieve a balance between random exploration during selection of a next query point (query point) and utilization of the surrogate model. To be specific, the acquisition function may choose to trust uncertainty of the surrogate model or perform random exploration to determine the next query point (namely, the first vector). In the foregoing process, an optimizer is usually used to find an input value that enables the acquisition function to be maximized, and the input value is used as the next query point. A specific processing process of the acquisition function is not described in this application.

Then the first vector is input to the objective function to obtain the group of performance parameters of the antenna.

The objective function represents a relationship between a design parameter and a performance parameter of the antenna. An input for the objective function is the design parameter of the antenna, and an output is the performance parameter of the antenna.

Step S640: When the group of performance parameters of the antenna meets a preset condition or i is equal to a preset quantity of times, determine M design parameters included in the first vector as design parameters of the antenna.

The preset condition includes a group of reference performance parameters of the antenna. When a difference between the group of performance parameters and the group of reference performance parameters of the antenna is less than a preset threshold, the group of performance parameters of the antenna meets the preset condition. In this case, the foregoing iteration process ends.

Specifically, the group of performance parameters of the antenna includes one or more performance parameters. The difference between the group of performance parameters and the group of reference performance parameters of the antenna may be as follows: Subtraction is performed between values of performance parameters of a same type in the group of performance parameters and the reference performance parameters of the antenna, and an absolute value of a difference is obtained. Then an average value or a sum of differences of various performance parameters is calculated as the difference between the group of performance parameters and the group of reference performance parameters of the antenna. In this application, the difference may alternatively be calculated in another manner. This is not limited herein.

Optionally, the method further includes: when the group of performance parameters of the antenna does not meet the preset condition and i is not equal to the preset quantity of times, adding the first vector and the group of performance parameters of the antenna, as one piece of training data, to a dataset used for training the surrogate model, and starting a next iteration.

Specifically, when a group of predicted values output by the surrogate model does not meet the preset condition and i is not equal to the preset quantity of times, a piece of new training data is generated, and a next iteration process is performed according to the foregoing steps.

Optionally, the method further includes: before obtaining the plurality of vectors from the optimization space, training the surrogate model by using the dataset of the surrogate model.

New training data is generated during each iteration process, and is updated to the dataset for training the surrogate model. Therefore, each time before the surrogate model performs inference, a more accurate surrogate model may be obtained by training the surrogate model by using an updated dataset, to improve accuracy of the surrogate model, and further select a design parameter that better meets a requirement and increase a qualification ratio for manufacturing an antenna product.

The M design parameters include one or more of the following parameters of the antenna: a thickness, a dielectric coefficient of a material, and a shape parameter.

The performance parameter includes one or more of the following parameters of the antenna: a scattering parameter, a radiation pattern, and a sidelobe width.

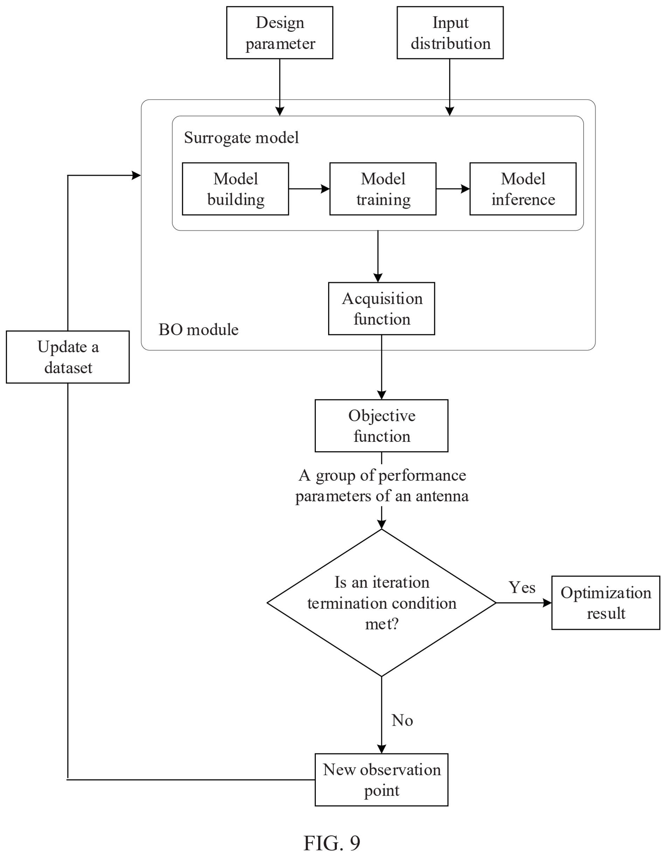

FIG. 9 is a flowchart of an antenna design method according to an embodiment of this application.

As shown in FIG. 9, during each iteration process, one or more vectors including a design parameter and an input distribution of each design parameter are input to a surrogate model of a BO module, and the surrogate model performs inference to obtain a plurality of groups of predicted values of a performance parameter of an antenna and a plurality of degrees of certainty corresponding to the plurality of groups of predicted values. Then a first vector with a largest value is determined from the one or more vectors by using an acquisition function based on a result of the surrogate model. The first vector is input to an objective function to obtain a corresponding group of performance parameters of the antenna. Then whether an iteration termination condition is met is determined. To be specific, whether the group of performance parameters of the antenna meets a preset condition or whether a quantity of iterations meets a preset quantity of times is determined. If a determining result is yes, M design parameters included in the first vector are used as design parameters of the antenna. Otherwise, the first vector and the group of performance parameters of the antenna are added, as one piece of training data (that is, a new observation point in FIG. 9), to a dataset used for training the surrogate model, and a next iteration process starts to be performed.

Specifically, for specific execution processes of the steps in FIG. 9, refer to corresponding descriptions in the foregoing embodiments. Details are not described herein again.

The BO module in FIG. 9 may be deployed at the application layer 110 in the architecture in FIG. 1.

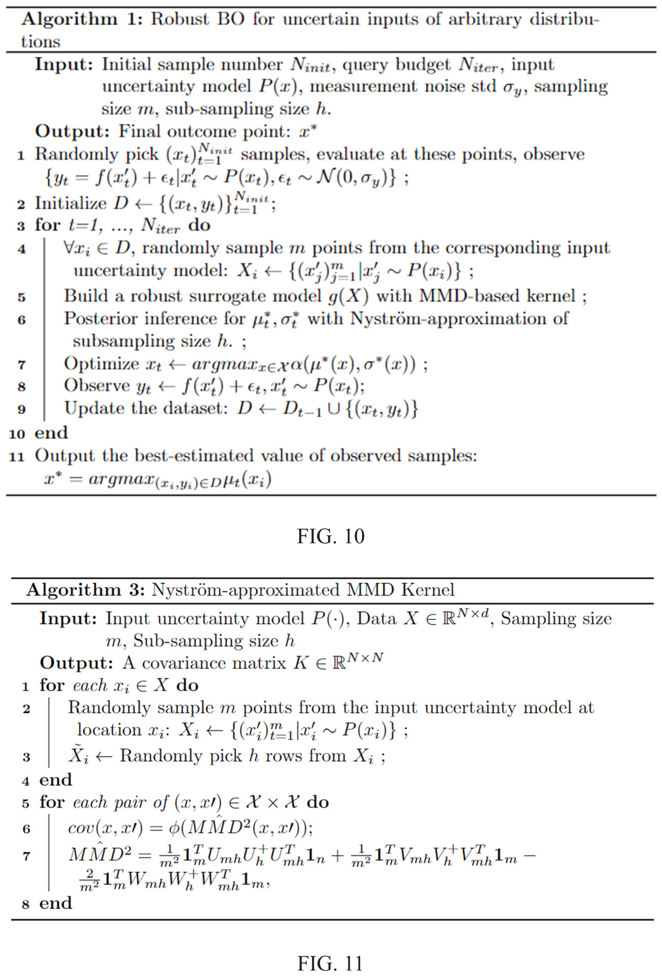

FIG. 10 shows example code of BO in an antenna design method according to an embodiment of this application.

As shown in FIG. 10, an algorithm Algorithm 1 is a robust Bayesian optimization Robust BO algorithm according to an embodiment of this application, and can adapt to any input distribution.

An input Input for the algorithm includes: a quantity of initial design parameters Initial Sample Number, a limit of a quantity of queries Query Budget, an input distribution of a design parameter Input Uncertainty Model, a standard deviation of a measurement error Measurement Noise Std, a sample set size Sampling Size, and a sample subset size Sub-Sampling Size.

An output Output of the algorithm includes an optimization result, that is, a determined design parameter.

Code in a line 1 indicates to select an antenna design parameter that needs to be optimized, and evaluate the design parameter (that is, a function value of an objective function). Code in a line 2 indicates to invoke the objective function by randomly selecting a plurality of design vectors, and query a corresponding objective function value for initializing a training dataset. Code in lines 3 to 9 indicates an iteration process: sampling an input distribution of each design parameter, building a surrogate model, training the surrogate model and accelerating model inference, optimizing the design parameter based on an output of the surrogate model, obtaining a new observation point, and updating the new observation point to a dataset. Code in a line 10 indicates to end the iteration process. Code in a line 11 indicates to output the foregoing optimization result.

Specifically, for specific processes of the steps in the algorithm 1, refer to corresponding descriptions in the foregoing embodiments. Details are not described herein again.

FIG. 11 shows example code for increasing an inference speed of a surrogate model according to an embodiment of this application.

FIG. 11 shows an algorithm (that is, an algorithm Algorithm 3 in FIG. 11).

An input Input for the algorithm is as follows: an input distribution of a design parameter Input Uncertainty Model, a dataset for training a surrogate model Data X, a sample set size Sampling Size, and a sample subset size Sub-Sampling Size.

An output Output of the algorithm is a covariance matrix A Covariance Matrix (namely, the foregoing covariance matrix $i \times i$).

Code in lines 1 to 4 indicates to perform sampling from an output distribution of each design parameter to obtain a sample set and a sample subset. Code in lines 5 to 8 indicates to sequentially calculate each element in the covariance matrix.

Specifically, for a specific calculation process of the algorithm 3, refer to corresponding descriptions in the foregoing method embodiments. Details are not described herein again.

Table 1 shows a comparison between a model inference speed in a BO method in embodiments of this application and a model inference speed in an empirical Empirical method.

As shown in Table 1, when a sample set size is 100, inference time of a surrogate model in the empirical method is approximately 8.117 seconds, and an inference speed of a surrogate model in the BO method in this application is merely approximately 0.780 seconds. When a sample set size is 1000, inference time of a surrogate model in the empirical method is approximately 840.715 seconds, and an inference speed of a surrogate model in the BO method in this application is merely approximately 21.473 seconds. It can be learned that, according to the method in this application, a speed of an inference model can be greatly increased, so that an optimization result of an antenna design parameter can be quickly obtained.

Table 1: Table of a comparison between a model inference speed in a BO method in this application and a model inference speed in a conventional optimization method

| Method Method | Sample set size Sampling Size | Sample subset size Sub-Sampling Size | Inference time (s) Inference Time | Quantity of test points Batch Size |
|---|---|---|---|---|
| Empirical method | 20 | - | 1.143 ± 0.083 | 512 |
| Empirical method | 100 | - | 8.117 ± 0.040 | 128 |
| Empirical method | 1000 | - | 840.715 ± 2.182 | 1 |
| This application | 100 | 10 | 0.780± 0.001 | 512 |
| This application | 1000 | 100 | 21.473± 0.984 | 128 |

In addition to the foregoing embodiments for optimizing an antenna design parameter, the BO method in this application may be further applied to other scenarios.

Example: a network parameter optimization scenario

In this scenario, a process of determining a network parameter by using the BO method is similar to the process of the antenna design method in the foregoing embodiments. To be specific, the network parameter needs to be obtained through a plurality of iterations. However, an input and an output of a surrogate model are different. In this scenario, parameters that need to be optimized include base station parameters such as an antenna transmit power, an electrical downtilt, an azimuth, a beam model, and an intra-frequency/inter-frequency handover parameter of a base station. To be specific, in this scenario, a plurality of vectors are input during an $i^{th}$ iteration process, each of the plurality of vectors includes G base station parameters, and the G network parameters include one or more of the foregoing base station parameters, where G is a positive integer.

During the $i^{th}$ iteration process, the plurality of vectors and an input distribution of each network parameter are input to a surrogate model of BO, to obtain a plurality of groups of predicted values of network performance and a plurality of degrees of certainty that respectively correspond to the plurality of groups of predicted values. Then a vector with a largest value is determined from the plurality of vectors by using an acquisition function based on a result output by the surrogate model, and the vector is input to an objective function to obtain a corresponding group of objective function values. Then whether an iteration termination condition is met is determined. To be specific, whether the group of objective function values meets a preset condition or whether a quantity of iterations meets a preset quantity of times is determined. If a determining result is yes, G base station parameters included in the vector are determined as network parameters for configuration. Otherwise, the vector and the group of objective function values are added, as one piece of training data, to a dataset used for training the surrogate model, and a next iteration process starts to be performed.

An input distribution of a base station parameter may be obtained through analysis based on service knowledge, or may be obtained through statistics collection based on historical data.

A network performance parameter includes a downlink peak/average rate of a user, signal interference strength, a degree of balance among users, network resource utilization, or the like.

Specifically, for a specific calculation process of an iteration in the BO method in this scenario, refer to the descriptions in the method embodiments of FIG. 3 to FIG. 11. Details are not described herein again.

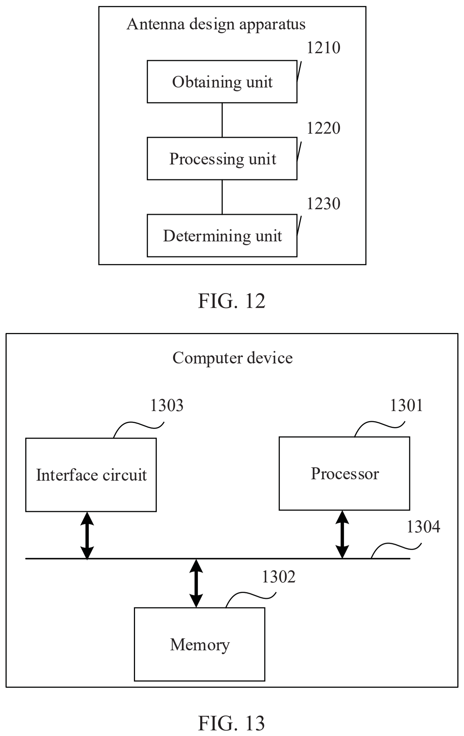

FIG. 12 is a diagram of a structure of an antenna design apparatus according to an embodiment of this application. As shown in FIG. 11, the apparatus includes an obtaining unit 1210, a processing unit 1220, and a determining unit 1230. The apparatus determines a design parameter of the antenna through a plurality of iterations.

The obtaining unit 1210 is configured to: during an $i^{th}$ iteration process, obtain a plurality of vectors from optimization space, where each of the plurality of vectors includes M elements, the M elements respectively represent M design parameters of the antenna, the optimization space is used to describe a value range of each of the M design parameters, and M and i are positive integers; and obtain input distributions of the M design parameters. The processing unit 1220 is configured to: obtain input distributions of the M design parameters, and input the input distributions of the M design parameters and the plurality of vectors to a surrogate model of Bayesian optimization BO, to obtain a plurality of groups of predicted values of a performance parameter of the antenna and a plurality of degrees of certainty respectively corresponding to the plurality of groups of predicted values, where the plurality of groups of predicted values respectively correspond to the plurality of vectors, the plurality of degrees of certainty are respectively used to describe confidences of the plurality of groups of predicted values, a processing process of the surrogate model includes calculating a covariance between any two of the plurality of vectors, and the covariance between any two vectors is obtained by performing calculation on a sample set obtained by sampling the input distributions; process the plurality of groups of predicted values and the plurality of degrees of certainty based on an acquisition function of the BO, to determine a first vector from the plurality of vectors, where an output of the acquisition function that corresponds to the first vector is the largest; and input the first vector to an objective function to obtain a group of performance parameters of the antenna. The determining unit 1230 is configured to: when the group of performance parameters of the antenna meets a preset condition or i is equal to a preset quantity of times, determine M design parameters included in the first vector as design parameters of the antenna.

In a feasible implementation, the preset condition includes a group of reference performance parameters of the antenna, and when a difference between the group of performance parameters of the antenna and the group of reference performance parameters is less than a preset threshold, the group of performance parameters of the antenna meets the preset condition.

In a feasible implementation, the processing unit is further configured to: when the group of performance parameters of the antenna does not meet the preset condition and i is not equal to the preset quantity of times, add the first vector and the group of performance parameters of the antenna, as one piece of training data, to a dataset used for training the surrogate model, and start a next iteration.

In a feasible implementation, the plurality of vectors include a second vector and a third vector, and a covariance between the second vector and the third vector is obtained by inputting a first sample set and a second sample set to a maximum mean discrepancy MMD kernel function for processing. m vectors included in the first sample set are obtained through sampling based on the second vector and the input distribution. m vectors included in the second sample set are obtained through sampling based on the third vector and the input distribution. Each vector in the first sample set and the second sample set includes M elements, and the M elements respectively represent the M design parameters.

In a feasible implementation, a process of processing the first sample set and the second sample set by the MMD kernel function includes: adding a first matrix to a second matrix, and subtracting a third matrix multiplied by 2. The first matrix is obtained by multiplying a fourth matrix, a transposed matrix of the fourth matrix, and a pseudo-inverse matrix of the fourth matrix, where the fourth matrix is obtained by processing h vectors in the first sample set by using the MMD kernel function, and h is a positive integer less than m. The second matrix is obtained by multiplying a fifth matrix, a transposed matrix of the fifth matrix, and a pseudo-inverse matrix of the fifth matrix, where the fifth matrix is obtained by processing h vectors in the second sample set by using the MMD kernel function. The third matrix is obtained by multiplying a sixth matrix, a transposed matrix of the sixth matrix, and a pseudo-inverse matrix of the sixth matrix, where the sixth matrix is obtained by processing h vectors in the first sample set and h vectors in the second sample set by using the MMD kernel function.

In a feasible implementation, the processing unit is further configured to: before obtaining the plurality of vectors from the optimization space, train the surrogate model by using the dataset of the surrogate model.

In a feasible implementation, the input distribution is obtained by collecting statistics on production data, and an input distribution of each design parameter is represented by a probability distribution or a Gaussian distribution.

In a feasible implementation, the M design parameters include one or more of the following parameters of the antenna: a thickness, a dielectric coefficient of a material, and a shape parameter; and the performance parameter includes one or more of the following parameters of the antenna: a scattering parameter, a radiation pattern, and a sidelobe width.

Specifically, for specific execution processes of the units in the antenna design apparatus, refer to corresponding descriptions in the foregoing method embodiments. Details are not described herein again.

FIG. 13 is a diagram of a structure of a computer device according to an embodiment of this application. The computer device may be used as a specific implementation of the antenna design apparatus in FIG. 12 or an example hardware structure of the computer device in FIG. 1. As shown in FIG. 13, the computer device includes a processor 1301, a memory 1302, and an interface circuit 1303 that communicate with each other through a bus 1304. The computer device may be configured to perform the foregoing antenna design method. During an $i^{th}$ iteration process of the method:

The processor 1301 is configured to: during the $i^{th}$ iteration process, obtain a plurality of vectors from optimization space, where each of the plurality of vectors includes M elements, the M elements respectively represent M design parameters of the antenna, the optimization space is used to describe a value range of each of the M design parameters, and M and i are positive integers; and obtain input distributions of the M design parameters. The processor 1301 is further configured to: obtain input distributions of the M design parameters, and input the input distributions of the M design parameters and the plurality of vectors to a surrogate model of Bayesian optimization BO, to obtain a plurality of groups of predicted values of a performance parameter of the antenna and a plurality of degrees of certainty respectively corresponding to the plurality of groups of predicted values, where the plurality of groups of predicted values respectively correspond to the plurality of vectors, the plurality of degrees of certainty are respectively used to describe confidences of the plurality of groups of predicted values, a processing process of the surrogate model includes calculating a covariance between any two of the plurality of vectors, and the covariance between any two vectors is obtained by performing calculation on a sample set obtained by sampling the input distributions; process the plurality of groups of predicted values and the plurality of degrees of certainty based on an acquisition function of the BO, to determine a first vector from the plurality of vectors, where an output of the acquisition function that corresponds to the first vector is the largest; and input the first vector to an objective function to obtain a group of performance parameters of the antenna. The processor 1301 is further configured to: when the group of performance parameters of the antenna meets a preset condition or i is equal to a preset quantity of times, determine M design parameters included in the first vector as design parameters of the antenna.

The memory 1302 is further configured to store the plurality of vectors, the design parameters of the antenna, the input distributions of the design parameters, and a dataset for training the surrogate model. When the dataset exceeds a specific size, the dataset may be stored on another computer device. In this case, the computer device communicates, through the interface circuit 1303, with the another computer device that stores the dataset.

Specifically, for a specific process of performing the antenna design method by the computer device, refer to the descriptions in the foregoing embodiments. Details are not described herein again.

An embodiment of this application provides a chip system. The chip system includes at least one processor, a memory, and an interface circuit. The memory, the interface circuit, and the at least one processor are interconnected through a line. The at least one memory stores instructions. When the instructions are executed by the processor, some or all of the steps described in any one of the foregoing antenna design method embodiments are implemented.

An embodiment of this application provides a computer-readable storage medium. The computer-readable storage medium stores a computer program. When the computer program is executed, some or all of the steps described in any one of the foregoing antenna design method embodiments are implemented.

An embodiment of this application provides a computer program product. The computer program product includes instructions. When the instructions are executed by a processor, some or all of the steps described in any one of the foregoing antenna design method embodiments are implemented.

In the foregoing embodiments, the descriptions of the embodiments have respective focuses. For a part that is not described in detail in an embodiment, refer to related descriptions in other embodiments. It should be noted that, for ease of description, the foregoing method embodiments are described as a combination of a series of actions. However, persons skilled in the art should be aware that this application is not limited to the described order of the actions, because some steps may be performed in another order or simultaneously according to this application. In addition, persons skilled in the art should also be aware that embodiments described in this specification are all example embodiments, and the described actions and modules are not necessarily needed for this application.

In the several embodiments provided in this application, it should be understood that the disclosed apparatuses may be implemented in other manners. For example, the described apparatus embodiments are merely examples. For example, division into the units is merely logical function division. During actual implementation, another division manner may be used. For example, a plurality of units or components may be combined or integrated into another system, or some features may be ignored or not performed. In addition, the shown or discussed mutual couplings, direct couplings, or communication connections may be implemented through some interfaces. The indirect couplings or communication connections between the apparatuses or units may be implemented in an electrical form or other forms.

The foregoing units described as separate components may or may not be physically separated, and components shown as units may or may not be physical units, to be specific, may be located in one place, or may be distributed on a plurality of network units. Some or all of the units may be selected according to actual requirements to achieve the objectives of the solutions of embodiments.

The foregoing embodiments are merely intended to describe the technical solutions of this application, but not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions in embodiments of this application.

**Claims**

1. An antenna design method, wherein the method comprises:
   determining a design parameter of the antenna through a plurality of iterations, wherein an $i^{th}$ iteration process is as follows:

   obtaining a plurality of vectors from optimization space, wherein each of the plurality of vectors comprises M elements, the M elements respectively represent M design parameters of the antenna, the optimization space is used to describe a value range of each of the M design parameters, and M and i are positive integers;
   obtaining input distributions of the M design parameters, and inputting the input distributions of the M design parameters and the plurality of vectors to a surrogate model of Bayesian optimization BO, to obtain a plurality of groups of predicted values of a performance parameter of the antenna and a plurality of degrees of certainty respectively corresponding to the plurality of groups of predicted values, wherein the plurality of groups of predicted values respectively correspond to the plurality of vectors, the plurality of degrees of certainty are respectively used to describe confidences of the plurality of groups of predicted values, a processing process of the surrogate model comprises calculating a covariance between any two of the plurality of vectors, and the covariance between any two vectors is obtained by performing calculation on a sample set obtained by sampling the input distributions;
   processing the plurality of groups of predicted values and the plurality of degrees of certainty based on an acquisition function of the BO, to determine a first vector from the plurality of vectors, wherein an output of the acquisition function that corresponds to the first vector is the largest; and inputting the first vector to an objective function to obtain a group of performance parameters of the antenna; and
   when the group of performance parameters of the antenna meets a preset condition or i is equal to a preset quantity of times, determining M design parameters comprised in the first vector as design parameters of the antenna.

2. The method according to claim 1, wherein
   the preset condition comprises a group of reference performance parameters of the antenna, and when a difference between the group of performance parameters of the antenna and the group of reference performance parameters is less than a preset threshold, the group of performance parameters of the antenna meets the preset condition.

3. The method according to claim 1 or 2, wherein the method further comprises:
   when the group of performance parameters of the antenna does not meet the preset condition and i is not equal to the preset quantity of times, adding the first vector and the group of performance parameters of the antenna, as one piece of training data, to a dataset used for training the surrogate model, and starting a next iteration.

4. The method according to any one of claims 1 to 3, wherein

the plurality of vectors comprise a second vector and a third vector, and a covariance between the second vector and the third vector is obtained by inputting a first sample set and a second sample set to a maximum mean discrepancy MMD kernel function for processing, wherein

m vectors comprised in the first sample set are obtained through sampling based on the second vector and the input distribution, m vectors comprised in the second sample set are obtained through sampling based on the third vector and the input distribution, each vector in the first sample set and the second sample set comprises M elements, and the M elements respectively represent the M design parameters.

5. The method according to claim 4, wherein

a process of processing the first sample set and the second sample set by the MMD kernel function comprises: adding a first matrix to a second matrix, and subtracting a third matrix multiplied by 2, wherein

the first matrix is obtained by multiplying a fourth matrix, a transposed matrix of the fourth matrix, and a pseudo-inverse matrix of the fourth matrix, the fourth matrix is obtained by processing h vectors in the first sample set by using the MMD kernel function, and h is a positive integer less than m;

the second matrix is obtained by multiplying a fifth matrix, a transposed matrix of the fifth matrix, and a pseudo-inverse matrix of the fifth matrix, and the fifth matrix is obtained by processing h vectors in the second sample set by using the MMD kernel function; and

the third matrix is obtained by multiplying a sixth matrix, a transposed matrix of the sixth matrix, and a pseudo-inverse matrix of the sixth matrix, and the sixth matrix is obtained by processing h vectors in the first sample set and h vectors in the second sample set by using the MMD kernel function.

6. The method according to any one of claims 1 to 5, wherein the method further comprises:
before obtaining the plurality of vectors from the optimization space, training the surrogate model by using the dataset of the surrogate model.

7. The method according to any one of claims 1 to 6, wherein
the input distribution is obtained by collecting statistics on production data, and an input distribution of each design parameter is represented by a probability distribution or a Gaussian distribution.

8. The method according to any one of claims 1 to 7, wherein

the M design parameters comprise one or more of the following parameters of the antenna: a thickness, a dielectric coefficient of a material, and a shape parameter; and
the performance parameter comprises one or more of the following parameters of the antenna: a scattering parameter, a radiation pattern, and a sidelobe width.

9. An antenna design apparatus, wherein the apparatus determines a design parameter of the antenna through a plurality of iterations, and the apparatus comprises:

an obtaining unit, configured to: during an $i^{th}$ iteration process, obtain a plurality of vectors from optimization space, wherein each of the plurality of vectors comprises M elements, the M elements respectively represent M design parameters of the antenna, the optimization space is used to describe a value range of each of the M design parameters, and M and i are positive integers; and obtain input distributions of the M design parameters;
a processing unit, configured to: obtain input distributions of the M design parameters, and input the input distributions of the M design parameters and the plurality of vectors to a surrogate model of Bayesian optimization BO, to obtain a plurality of groups of predicted values of a performance parameter of the antenna and a plurality of degrees of certainty respectively corresponding to the plurality of groups of predicted values, wherein the plurality of groups of predicted values respectively correspond to the plurality of vectors, the plurality of degrees of certainty are respectively used to describe confidences of the plurality of groups of predicted values, a processing process of the surrogate model comprises calculating a covariance between any two of the plurality of vectors, and the covariance between any two vectors is obtained by performing calculation on a sample set obtained by sampling the input distributions; process the plurality of groups of predicted values and the plurality of degrees of certainty based on an acquisition function of the BO, to determine a first vector from the plurality of vectors, wherein an output of the acquisition function that corresponds to the first vector is the largest; and input the first vector to an objective function to obtain a group of performance parameters of the antenna; and

a determining unit, configured to: when the group of performance parameters of the antenna meets a preset condition or i is equal to a preset quantity of times, determine M design parameters comprised in the first vector as design parameters of the antenna.

10. The apparatus according to claim 9, wherein
the preset condition comprises a group of reference performance parameters of the antenna, and when a difference between the group of performance parameters of the antenna and the group of reference performance parameters is less than a preset threshold, the group of performance parameters of the antenna meets the preset condition.

11. The apparatus according to claim 9 or 10, wherein the processing unit is further configured to:
when the group of performance parameters of the antenna does not meet the preset condition and i is not equal to the preset quantity of times, add the first vector and the group of performance parameters of the antenna, as one piece of training data, to a dataset used for training the surrogate model, and start a next iteration.

12. The apparatus according to any one of claims 9 to 11, wherein

the plurality of vectors comprise a second vector and a third vector, and a covariance between the second vector and the third vector is obtained by inputting a first sample set and a second sample set to a maximum mean discrepancy MMD kernel function for processing, wherein
m vectors comprised in the first sample set are obtained through sampling based on the second vector and the input distribution, m vectors comprised in the second sample set are obtained through sampling based on the third vector and the input distribution, each vector in the first sample set and the second sample set comprises M elements, and the M elements respectively represent the M design parameters.

13. The apparatus according to claim 12, wherein

a process of processing the first sample set and the second sample set by the MMD kernel function comprises: adding a first matrix to a second matrix, and subtracting a third matrix multiplied by 2, wherein
the first matrix is obtained by multiplying a fourth matrix, a transposed matrix of the fourth matrix, and a pseudo-inverse matrix of the fourth matrix, the fourth matrix is obtained by processing h vectors in the first sample set by using the MMD kernel function, and h is a positive integer less than m;
the second matrix is obtained by multiplying a fifth matrix, a transposed matrix of the fifth matrix, and a pseudo-inverse matrix of the fifth matrix, and the fifth matrix is obtained by processing h vectors in the second sample set by using the MMD kernel function; and
the third matrix is obtained by multiplying a sixth matrix, a transposed matrix of the sixth matrix, and a pseudo-inverse matrix of the sixth matrix, and the sixth matrix is obtained by processing h vectors in the first sample set and h vectors in the second sample set by using the MMD kernel function.

14. The apparatus according to any one of claims 9 to 13, wherein the processing unit is further configured to:
before obtaining the plurality of vectors from the optimization space, train the surrogate model by using the dataset of the surrogate model.

15. The apparatus according to claim 14, wherein
the input distribution is obtained by collecting statistics on production data, and an input distribution of each design parameter is represented by a probability distribution or a Gaussian distribution.

16. The apparatus according to any one of claims 9 to 15, wherein

the M design parameters comprise one or more of the following parameters of the antenna: a thickness, a dielectric coefficient of a material, and a shape parameter; and
the performance parameter comprises one or more of the following parameters of the antenna: a scattering parameter, a radiation pattern, and a sidelobe width.

17. A computer device, wherein the computer device comprises at least one processor, a memory, and an interface circuit, the memory, the interface circuit, and the at least one processor are interconnected through a line, the at least one memory stores instructions, and when the instructions are executed by the processor, the method according to any one of claims 1 to 8 is implemented.

18. A computer-readable storage medium, wherein the computer-readable storage medium stores a computer program, and when the computer program is executed, the method according to any one of claims 1 to 8 is implemented.

19. A computer program product, wherein the computer program product comprises instructions, and when the instructions are executed, the method according to any one of claims 1 to 8 is implemented.

Computer device 100

Application layer 110 (user mode)

Bayesian optimization module 111 (surrogate model + acquisition function)

Machine learning framework 112

Operating system 120 (kernel mode)

File system 121

Block layer 122

Device driver 123

Device layer 130

Memory 131

Network interface card 132

Processor 133

FIG. 1

EP 4 738 179 A1

Data collection device
260

Database 230

Training device 220

Text

Execution device 210

User request

I/O
Interface
212

Surrogate model 201
Acquisition function 202

Data storage
system 250

User
equipment
240

Optimization
result

Calculation module 211

FIG. 2

FIG. 3

FIG. 4

EP 4 738 179 A1

FIG. 5

Obtain a plurality of vectors from optimization space, where each of the plurality of vectors includes M elements, the M elements respectively represent M design parameters of the antenna, the optimization space is used to describe a value range of each of the M design parameters, and M and i are positive integers
S610

Obtain input distributions of the M design parameters, and input the input distributions of the M design parameters and the plurality of vectors to a surrogate model of Bayesian optimization BO, to obtain a plurality of groups of predicted values of a performance parameter of the antenna and a plurality of degrees of certainty respectively corresponding to the plurality of groups of predicted values, where the plurality of groups of predicted values respectively correspond to the plurality of vectors, the plurality of degrees of certainty are respectively used to describe confidences of the plurality of groups of predicted values, a processing process of the surrogate model includes calculating a covariance between any two of the plurality of vectors, and the covariance between any two vectors is obtained by performing calculation on a sample set obtained by sampling the input distributions
S620

Process the plurality of groups of predicted values and the plurality of degrees of certainty based on an acquisition function of the BO, to determine a first vector from the plurality of vectors, where an output of the acquisition function that corresponds to the first vector is the largest, and input the first vector to an objective function to obtain a group of performance parameters of the antenna
S630

When the group of performance parameters of the antenna meets a preset condition or i is equal to a preset quantity of times, determine M design parameters included in the first vector as design parameters of the antenna
S640

FIG. 6

```
┌─────────────────────┐              ┌─────────────────────┐
│   Second vector +   │              │    Third vector +   │
│  input distribution │              │  input distribution │
└─────────────────────┘              └─────────────────────┘
           │                                    │
           │ Sampling                           │ Sampling
           ▼                                    ▼
┌─────────────────────┐              ┌─────────────────────┐
│                     │              │                     │
│   First sample set  │              │  Second sample set  │
│                     │              │                     │
└─────────────────────┘              └─────────────────────┘
           │                                    │
           │         MMD kernel function        │
           └─────────────────┬──────────────────┘
                             ▼
                  ┌─────────────────────┐
                  │                     │
                  │     Covariance      │
                  │                     │
                  └─────────────────────┘
```

FIG. 7

EP 4 738 179 A1

```
┌─────────────────────┐                              ┌─────────────────────┐
│  Second vector +    │                              │   Third vector +    │
│  input distribution │                              │  input distribution │
└─────────────────────┘                              └─────────────────────┘
           │ Sampling                                           │ Sampling
           ▼                                                    ▼
┌─────────────────────┐                              ┌─────────────────────┐
│   First sample set  │                              │  Second sample set  │
└─────────────────────┘                              └─────────────────────┘
           │                                                    │
           ▼                                                    ▼
┌─────────────────────┐                              ┌─────────────────────┐
│ First sample subset │                              │ Second sample subset│
│     (h vectors)     │                              │     (h vectors)     │
└─────────────────────┘                              └─────────────────────┘
```

MMD kernel function          MMD kernel function          MMD kernel function

| Fourth matrix, transposed matrix of the fourth matrix, and pseudo-inverse matrix of the fourth matrix | Sixth matrix, transposed matrix of the sixth matrix, and pseudo-inverse matrix of the sixth matrix | Fifth matrix, transposed matrix of the fifth matrix, and pseudo-inverse matrix of the fifth matrix |

Product     Product     Product

| First matrix | Third matrix | Second matrix |

Covariance

FIG. 8

FIG. 9

---

**Algorithm 1:** Robust BO for uncertain inputs of arbitrary distributions

---

**Input:** Initial sample number $N_{init}$, query budget $N_{iter}$, input uncertainty model $P(x)$, measurement noise std $\sigma_y$, sampling size $m$, sub-sampling size $h$.

**Output:** Final outcome point: $x^*$

1 Randomly pick $(x_t)_{t=1}^{N_{init}}$ samples, evaluate at these points, observe $\{y_t = f(x_t') + \epsilon_t | x_t' \sim P(x_t), \epsilon_t \sim \mathcal{N}(0, \sigma_y)\}$ ;

2 Initialize $D \leftarrow \{(x_t, y_t)\}_{t=1}^{N_{init}}$;

3 **for** $t=1, ..., N_{iter}$ **do**

4    $\forall x_i \in D$, randomly sample $m$ points from the corresponding input uncertainty model: $X_i \leftarrow \{(x_j')_{j=1}^m | x_j' \sim P(x_i)\}$ ;

5    Build a robust surrogate model $g(X)$ with MMD-based kernel ;

6    Posterior inference for $\mu_t^*, \sigma_t^*$ with Nyström-approximation of subsampling size $h$. ;

7    Optimize $x_t \leftarrow argmax_{x \in \mathcal{X}} \alpha(\mu^*(x), \sigma^*(x))$ ;

8    Observe $y_t \leftarrow f(x_t') + \epsilon_t, x_t' \sim P(x_t)$;

9    Update the dataset: $D \leftarrow D_{t-1} \cup \{(x_t, y_t)\}$

10 **end**

11 Output the best-estimated value of observed samples: $x^* = argmax_{(x_i, y_i) \in D} \mu_t(x_i)$

---

FIG. 10

---

**Algorithm 3:** Nyström-approximated MMD Kernel

---

**Input:** Input uncertainty model $P(\cdot)$, Data $X \in \mathbb{R}^{N \times d}$, Sampling size $m$, Sub-sampling size $h$

**Output:** A covariance matrix $K \in \mathbb{R}^{N \times N}$

1 **for** each $x_i \in X$ **do**

2    Randomly sample $m$ points from the input uncertainty model at location $x_i$: $X_i \leftarrow \{(x_i')_{t=1}^m | x_i' \sim P(x_i)\}$ ;

3    $\tilde{X}_i \leftarrow$ Randomly pick $h$ rows from $X_i$ ;

4 **end**

5 **for** each pair of $(x, x\prime) \in \mathcal{X} \times \mathcal{X}$ **do**

6    $cov(x, x\prime) = \phi(\hat{MMD}^2(x, x\prime))$;

7    $\hat{MMD}^2 = \frac{1}{m^2} \mathbf{1}_m^T U_{mh} U_h^+ U_{mh}^T \mathbf{1}_n + \frac{1}{m^2} \mathbf{1}_m^T V_{mh} V_h^+ V_{mh}^T \mathbf{1}_m - \frac{2}{m^2} \mathbf{1}_m^T W_{mh} W_h^+ W_{mh}^T \mathbf{1}_m,$

8 **end**

---

FIG. 11

Antenna design apparatus

Obtaining unit — 1210

Processing unit — 1220

Determining unit — 1230

FIG. 12

Computer device

1303

Interface circuit

1301

Processor

1304

1302

Memory

FIG. 13

## INTERNATIONAL SEARCH REPORT

| International application No. |
|---|
| **PCT/CN2024/086086** |

**A. CLASSIFICATION OF SUBJECT MATTER**

G06F 30/27(2020.01)i

According to International Patent Classification (IPC) or to both national classification and IPC

**B. FIELDS SEARCHED**

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 天线, 参数, 输入, 分布, 协方差, 贝叶斯, 模型, 预测, antenna, parameters, input, distribution, covariance, Bayesian, model, prediction

**C. DOCUMENTS CONSIDERED TO BE RELEVANT**

| Category* | Citation of document, with indication, where appropriate, of the relevant passages | Relevant to claim No. |
|---|---|---|
| A | CN 109063266 A (XIDIAN UNIVERSITY) 21 December 2018 (2018-12-21) description, paragraphs [0041]-[0067] | 1-19 |
| A | CN 114519295 A (TSINGHUA UNIVERSITY et al.) 20 May 2022 (2022-05-20) entire document | 1-19 |
| A | CN 113076699 A (XI'AN JIAOTONG UNIVERSITY) 06 July 2021 (2021-07-06) entire document | 1-19 |
| A | CN 113420496 A (CHINA TELECOM CORP., LTD.) 21 September 2021 (2021-09-21) entire document | 1-19 |
| A | US 2022101106 A1 (SECONDMIND LTD.) 31 March 2022 (2022-03-31) entire document | 1-19 |

☐ Further documents are listed in the continuation of Box C.　☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **16 June 2024** | **20 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/086086**

| Patent document cited in search report | | | Publication date (day/month/year) | Patent family member(s) | | | Publication date (day/month/year) |
|---|---|---|---|---|---|---|---|
| CN | 109063266 | A | 21 December 2018 | None | | | |
| CN | 114519295 | A | 20 May 2022 | None | | | |
| CN | 113076699 | A | 06 July 2021 | None | | | |
| CN | 113420496 | A | 21 September 2021 | None | | | |
| US | 2022101106 | A1 | 31 March 2022 | US | 11475279 | B2 | 18 October 2022 |
| | | | | EP | 4026064 | A1 | 13 July 2022 |
| | | | | EP | 3786857 | A1 | 03 March 2021 |
| | | | | WO | 2021043670 | A1 | 11 March 2021 |

Form PCT/ISA/210 (patent family annex) (July 2022)

**REFERENCES CITED IN THE DESCRIPTION**

**Patent documents cited in the description**

- CN 202310940699